# EUROPEAN PATENT APPLICATION

(11) **EP 4 503 796 A1**
(43) Date of publication of application: **05.02.2025**
(21) Application number: 22934285.2
(22) Date of filing: 31.03.2022
(51) Int. Cl.: H04W 72/04

(54) **INFORMATION SENDING/RECEIVING METHOD AND APPARATUS BASED ON NON-CODEBOOK-BASED PUSCH**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2022/084683
(87) International publication number: WO 2023/184448

(57) **Abstract**

Disclosed in embodiments of the present application are an information sending/receiving method and apparatus based on a non-codebook-based PUSCH. The method comprises: in response to the fact that the maximum number of PUSCH transport layers supported by a terminal device is increased to 8 layers, extending the existing first sounding reference signal (SRS) resource indicator (SRI) mapping table on the basis of the maximum number Lmax of uplink data transport layers supported by the terminal device to obtain a second SRI mapping table; and on the basis of the second SRI mapping table, indicating, to the terminal device, a first SRS resource combination measured from an SRS resource set, the first SRS resource combination being used for indicating a precoding matrix used for PUSCH transmission, and the first SRS resource combination comprising at least one single-port SRS resource. In the embodiments of the present application, the existing first SRI mapping table is extended, so that the extended second SRI mapping table fills the blank of an SRI mapping relationship corresponding to the newly added number of uplink data transport layers and newly added NSRS, thereby providing a fundamental basis for enhancing uplink transmission capability.

## Description

### TECHNICAL FIELD

The present disclosure relates to the technical field of communications, and more particularly to a method and an apparatus of sending/receiving information for non-codebook based PUSCH.

### BACKGROUND

In order to adapt to a current service or scenario, the number of uplink data transmission layers of a terminal device can be increased to 8 layers for supporting a higher uplink transmission rate comparable to the downlink transmission rate. When uplink of the terminal device is enhanced to 8 layers, how to realize non-codebook based physical uplink shared channel (PUSCH) transmission becomes a problem to be solved.

### SUMMARY

Embodiments of the present disclosure provide a method and an apparatus of sending/receiving information for non-codebook based PUSCH. The number of uplink data transmission layers can be increased to 8 layers at a terminal device, and non-codebook based PUSCH transmission is realized.

In a first aspect, an embodiment of the present disclosure provides a method of sending information for non-codebook based PUSCH, performed by a network device. The method includes:
determining that a maximum number of physical uplink shared channel PUSCH transmission layers supported by a terminal device is increased to 8 layers, extending an existed first sounding reference signal resource indicator (SRI) mapping table based on Lₘₐₓ, a maximum number of uplink data transmission layers, supported by the terminal device, and obtaining a second SRI mapping table; and
indicating a first SRS resource combination measured from an SRS resource set to the terminal device based on the second SRI mapping table, the first SRS resource combination indicates a pre-encoding matrix for PUSCH transmission, and the first SRS resource combination includes at least one single-port SRS resource.

In embodiments of the present disclosure, the existed first SRI mapping table is extended based on Lₘₐₓ, the maximum number of uplink data transmission layers, so that the extended second SRI mapping table fills a blank of an SRI mapping relationship corresponding to the newly added number of uplink data transmission layers and newly added N_{SRS}, and provides a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

In a second aspect, another embodiment of the present disclosure provides a method of receiving information for non-codebook based PUSCH, performed by a terminal device. The method includes:
increasing a maximum number of physical uplink shared channel (PUSCH) transmission layers supported by the terminal device to 8 layers, and acquiring a second SRI mapping table, in which the second SRI mapping table is obtained by extending an existed first SRI mapping table;
receiving an SRI index value sent by a network device, and determining a first SRS resource combination from the second SRI mapping table based on the SRI index value, in which the first SRS resource combination is a combination formed by SRS resource(s) selected from an SRS resource set and includes at least one single-port SRS resource; and
determining a pre-encoding matrix for PUSCH transmission based on the first SRS resource combination.

In embodiments of the present disclosure, the existed first SRI mapping table is extended, so that the extended second SRI mapping table can fill the blank of an SRI mapping relationship corresponding to the newly added number of uplink data transmission layers and newly added N_{SRS} via the extended SRI mapping table, and provide a fundamental basis for enhancing uplink transmission capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

In a third aspect, an embodiment of the present disclosure provides a communication apparatus which has some or all of functions of the network device in the method described in the above-mentioned first aspect. For example, functions of the communication apparatus may have functions in some or all of embodiments of the present disclosure, or may have functions for implementing any of embodiments of the present disclosure independently. The functions may be implemented by hardware, or may be implemented by executing corresponding software by hardware. The hardware or software includes one or more units or modules corresponding to the functions described above.

In one implementation, the communication apparatus may include in its structure a transceiving module and a processing module configured to support the communication device to perform the corresponding functions of the method described above. The transceiving module is for supporting communication between the communication apparatus and other devices. The communication apparatus may further include a storage module for coupling with the transceiving module and the processing module, which stores computer programs and data necessary for the communication apparatus.

By way of example, the processing module may be a processor, the transceiving module may be a transceiver or a communication interface, and the storage module may be a memory.

In a fourth aspect, an embodiment of the present disclosure provides another communication apparatus which has some or all of functions of the network device in the example of the method described in the above-mentioned second aspect. For example, functions of the communication apparatus may have functions in some or all of embodiments of the present disclosure, or may have functions for implementing any of embodiments of the present disclosure independently. The functions may be implemented by hardware, or may be implemented by executing corresponding software by hardware. The hardware or software includes one or more units or modules corresponding to the functions described above.

In one implementation, the communication apparatus may include in its structure a transceiving module and a processing module configured to support the communication device to perform the corresponding functions of the method described above. The transceiving module is for supporting communication between the communication apparatus and other devices. The communication apparatus may further include a storage module for coupling with the transceiving module and the processing module, which stores computer programs and data necessary for the communication apparatus.

In a fifth aspect, an embodiment of the present disclosure provides a communication apparatus. The communication apparatus includes a processor which, when calling a computer program in a memory, executes the method in the above-mentioned first aspect.

In a sixth aspect, an embodiment of the present disclosure provides a communication apparatus, in which this communication apparatus includes a processor which, when calling a computer program in a memory, executes the method in the above-mentioned second aspect.

In a seventh aspect, an embodiment of the present disclosure provides a communication apparatus. The communication apparatus includes a processor and a memory, this memory stores a computer program, and the processor executes the computer program stored in this memory, causing the communication apparatus to execute the method in the above-mentioned first aspect.

In an eighth aspect, an embodiment of the present disclosure provides a communication apparatus. The communication apparatus includes a processor and a memory, this memory stores a computer program, and the processor executes the computer program stored in this memory, causing the communication apparatus to execute the method in the above-mentioned second aspect.

In a ninth aspect, an embodiment of the present disclosure provides a communication apparatus. The apparatus includes a processor and an interface circuit, this interface circuit is used for receiving code instructions and transmitting the code instructions to the processor, and the processor is used for running the code instructions, causing the apparatus to execute the method in the above-mentioned first aspect.

In a tenth aspect, an embodiment of the present disclosure provides a communication apparatus. The apparatus includes a processor and an interface circuit, the interface circuit is used for receiving code instructions and transmitting the code instructions to the processor, and the processor is used for running the code instructions, causing the apparatus to execute the method in the above-mentioned second aspect.

In an eleventh aspect, an embodiment of the present disclosure provides a communication system. The system includes the communication apparatus in the third aspect and the communication apparatus in the fourth aspect, or the system includes the communication apparatus in the fifth aspect and the communication apparatus in the sixth aspect, or the system includes the communication apparatus in the seventh aspect and the communication apparatus in the eighth aspect, or the system includes the communication apparatus in the ninth aspect and the communication apparatus in the tenth aspect.

In a twelfth aspect, an embodiment of the present disclosure provides a computer-readable storage medium used for storing instructions used by the above-mentioned terminal device, and the instructions, when executed, enable the terminal device to execute the method in the above-mentioned first aspect.

In a thirteenth aspect, an embodiment of the present disclosure provides a computer-readable storage medium used for storing instructions used by the above-mentioned network device, and the instructions, when executed, enable the network device to execute the method in the above-mentioned second aspect.

In a fourteenth aspect, the present disclosure further provides a computer program product including a computer program, which, when running on a computer, enables the computer to execute the method in the above-mentioned first aspect.

In a fifteenth aspect, the present disclosure further provides a computer program product including a computer program, which, when running on a computer, enables the computer to execute the method in the above-mentioned second aspect.

In a sixteenth aspect, the present disclosure provides a chip system. The chip system includes at least one processor and interface used for supporting a terminal device to realize functions involved in the first aspect, for example, to determine or process at least one of data and information involved in the above-mentioned methods. In a possible design, the chip system further includes a memory, the memory is used for storing a computer program and data necessary for the terminal device. The chip system can be composed of a chip and can also include a chip and other discrete devices.

In a seventeenth aspect, the present disclosure provides a chip system. The chip system includes at least one processor and interface used for supporting a network device to realize functions involved in the second aspect, for example, to determine or process at least one of data and information involved in the above-mentioned methods. In a possible design, the chip system further includes a memory, the memory is used for storing a computer program and data necessary for the network device. The chip system can be composed of a chip and can also include a chip and other discrete devices.

In an eighteenth aspect, the present disclosure provides a computer program which, when running on a computer, enables the computer to execute the method in the above-mentioned first aspect.

In a nineteenth aspect, the present disclosure provides a computer program which, when running on a computer, enables the computer to execute the method in the above-mentioned second aspect.

### BRIEF DESCRIPTION OF THE DRAWINGS

In order to describe technical solutions in embodiments of the present disclosure or the background art more clearly, accompanying drawings required to be used in embodiments of the present disclosure or the background art will be described below.
FIG. 1 is a schematic diagram of an architecture of a communication system provided in an embodiment of the present disclosure;
FIG. 2 is a flow chart of a method of sending information for non-codebook based PUSCH provided by an embodiment of the present disclosure;
FIG. 3 is a flow chart of a method of sending information for non-codebook based PUSCH provided by an embodiment of the present disclosure;
FIG. 4 is a flow chart of a method of sending information for non-codebook based PUSCH provided by an embodiment of the present disclosure;
FIG. 5 is a flow chart of a method of sending information for non-codebook based PUSCH provided by an embodiment of the present disclosure;
FIG. 6 is a flow chart of a method of receiving information for non-codebook based PUSCH provided by an embodiment of the present disclosure;
FIG. 7 is a flow chart of a method of receiving information for non-codebook based PUSCH provided by an embodiment of the present disclosure;
FIG. 8 is a flow chart of a method of receiving information for non-codebook based PUSCH provided by an embodiment of the present disclosure;
FIG. 9 is a flow chart of a method of receiving information for non-codebook based PUSCH provided by an embodiment of the present disclosure;
FIG. 10 is a schematic structural diagram of a communication apparatus provided in an embodiment of the present disclosure;
FIG. 11 is a schematic structural diagram of a communication apparatus provided in an embodiment of the present disclosure; and
FIG. 12 is a schematic structural diagram of a chip provided in an embodiment of the present disclosure.

### DETAILED DESCRIPTION

Exemplary embodiments will be described in detail herein, examples of which are illustrated in the accompanying drawings. When the following description refers to the accompanying drawings, the same numbers in different accompanying drawings represent the same or similar elements unless otherwise indicated. The implementations described in the following exemplary embodiments do not represent all implementations consistent with the present disclosure. On the contrary, they are only examples of an apparatus and a method consistent with some aspects of the present disclosure as detailed in the appended claims.

Terms used in embodiments of the present disclosure are only intended to describe specific embodiments, rather than to limit the embodiments of the present disclosure. The singular forms "a", "an", and "the" used in embodiments of the present disclosure and the appended claims are also intended to include a plural form as well, unless the context clearly indicates otherwise. It should be further understood that the term "and/or" used herein refers to and includes any or all possible combinations of one or more listed relevant items. It should be understood that, although terms such as first, second and third, etc. may be adopted in embodiments of the present disclosure to describe various kinds of information, such information should not be limited to these terms. These terms are only used for distinguishing the same type of information from each other. For example, first information may also be referred to as second information, and similarly, the second information may also be referred to as the first information without departing from the scope of embodiments of the present disclosure, which depends on the context. For example, the word "if' used herein may be explained as "upon" or "when" or "in response to determining".

For purposes of brevity and ease of understanding, the terms "greater than" or "less than, "higher than" or "lower than" are used herein when characterizing size relationships. However, for those skilled in the art, it can be understood that, the term "greater than" also encompasses the meaning of "greater than or equal to", and "less than" also encompasses the meaning of "less than or equal to"; the term "higher than" encompasses the meaning of "higher than equal to" and "lower than" encompasses the meaning of "lower than equal to".

For facilitating understanding, firstly, terms involved in the present disclosure are introduced.

A sounding reference signal (SRS) is configured to estimate uplink channel frequency domain information to perform frequency selective scheduling, and is also configured to estimate an uplink channel to perform downlink beamforming.

An SRS resource indicator (SRI) is configured to indicate which SRS resource a UE uses for uplink data transmission.

A transmission rank indicator (TRI) indicates the number of data transmission layers corresponding to a pre-encoding matrix used by an actual PUSCH transmission.

In order to better understand a method of sending/receiving information for non-codebook based PUSCH disclosed in an embodiment of the present disclosure, a communication system to which an embodiment of the present disclosure is applicable will first be described below.

Embodiments of the present disclosure provide a communication system that may include, but is not limited to, a sending device and a receiving device. Optionally, the sending device may be a terminal device and the receiving device may be a network device.

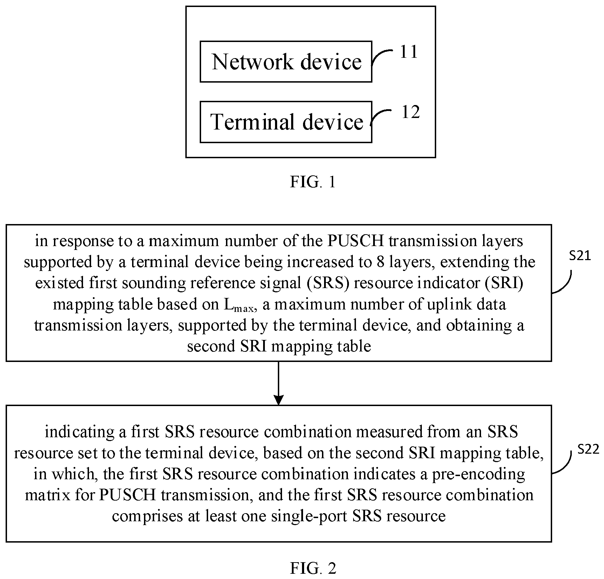

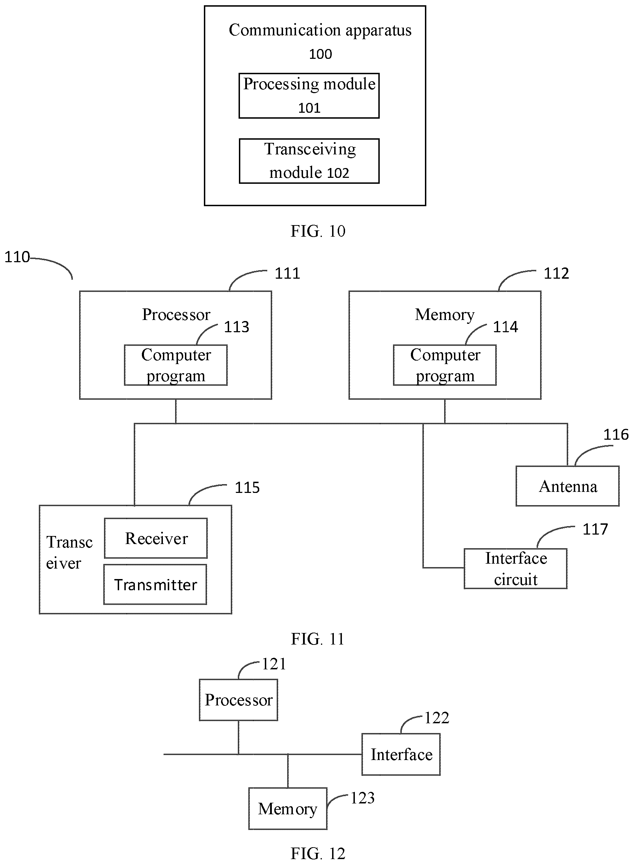

Please refer to FIG. 1, FIG. 1 is a schematic diagram of an architecture of a communication system provided in an embodiment of the present disclosure. This communication system can include, but is not limited to a network device and a terminal device, the number and form of devices shown in FIG. 11 are only intended to illustrate, rather than to constitute limitations on an embodiment of the present disclosure. In actual applications, two or more network devices and two or more terminal devices can be included. The communication system shown in FIG. 1 is illustrated to include a network device 11 and a terminal device 12.

It should be noted that the technical solutions of embodiments of the present disclosure can be applied to various communication systems, for example, a long term evolution (LTE) system, a 5th generation (5G) mobile communication system, a 5G new radio (NR) system, or other future novel mobile communication systems, etc.

The network device 11 in an embodiment of the present disclosure is an entity for transmitting or receiving signals at a network side. For example, the network device 11 can be an evolved NodeB (eNB), a transmission reception point (TRP), a next generation NodeB (gNB) in an NR system, a base station in other future mobile communication systems or an access node in a wireless fidelity (WiFi) system, etc. In an embodiment of the present disclosure, a specific technology and a specific device form that are adopted by the network device are not limited. The network device provided in the embodiments of the present disclosure can be composed of a central unit (CU) and a distributed unit (DU). The CU can also be referred to as a control unit. Protocol layers of the network device, such as a base station, can be split by adopting a CU-DU structure, functions of parts of the protocol layers are centrally controlled by the CU, and functions of parts or all of the remaining protocol layers are distributed in the DU, and the DU is centrally controlled by the CU.

The terminal device 12 in an embodiment of the present disclosure is an entity, such as a mobile phone, for receiving or transmitting signals. The terminal device can also be referred to as a terminal, a user equipment (UE), a mobile station (MS), a mobile terminal (MT), etc. The terminal device can be a car with a communication function, a smart car, a mobile phone, an internet of things device such as an NB-IoT or (e)MTC, a wearable device, a tablet computer (Pad), a computer with a radio transceiving function, a virtual reality (VR) terminal device, an augmented reality (AR) terminal device, a radio terminal device in industrial control, a radio terminal device in self-driving, a radio terminal device in remote medical surgery, a radio terminal device in a smart grid, a radio terminal device in transportation safety, a radio terminal device in a smart city, a radio terminal device in a smart home, etc. In an embodiment of the present disclosure, a specific technology and a specific device form that are adopted by the terminal device in an embodiment of the present disclosure are not limited.

It can be understood that the communication system described in an embodiment of the present disclosure is intended to describe the technical solution in an embodiment of the present disclosure more clearly, rather than to constitute a limitation on the technical solution provided in an embodiment of the present disclosure. It can be known by those ordinary skilled in the art that, with evolution of a system architecture and emergence of new service scenarios, the technical solution provided in an embodiment of the present disclosure is equally applicable to similar technical problems.

A method and an apparatus of sending/receiving information for non-codebook based PUSCH provided in the present disclosure will be introduced in detail below in combination with the accompanying drawings.

Please refer to FIG. 2, FIG. 2 is a flow chart of a method of sending information for non-codebook based PUSCH provided by an embodiment of the present disclosure. As shown in FIG. 2, the method is performed by a network device, and may include, but is not limited to, following steps.

In step S21, in response to that a maximum number of physical uplink shared channel (PUSCH) transmission layers supported by a terminal device is increased to 8 layers, an existed first sounding reference signal resource indicator (SRI) mapping table is extended based on Lₘₐₓ, a maximum number of uplink data transmission layers, supported by the terminal device, and obtaining a second SRI mapping table.

In an embodiment of the present disclosure, the number of uplink data transmission layers of the terminal device is increased to 8 layers, that is, the terminal device can support the maximum PUSCH transmission to be increased to 8 layers, and thus can be used to support a higher uplink transmission rate comparable to downlink transmission rate. In embodiments of the present disclosure, a first uplink data transmission layer is an uplink data transmission layer corresponding to PUSCH shared channel transmission originally supported by a single terminal, and a second uplink data transmission layer is a newly added uplink data transmission layer based on the original first uplink data transmission layer. For example, the original uplink data transmission layers corresponding to the PUSCH are layers 1-4, and the layers 1-4 are the first uplink data transmission layers. With newly increasing to 8 layers in the present disclosure, the second uplink data transmission layers are layer 5 to layer 8. This definition applies to all embodiments of the present disclosure.

The network device configures an SRS resource set with a function being non-codebook to the terminal device via a high-layer signaling. For example, the network device may configure the non-codebook SRS resource set to the terminal device through radio resource control (RRC) signaling or media access control-control element (MAC-CE). Optionally, configuration or reconfiguration can be performed via the RRC, and part of or all of configurations can also be updated via the MAC-CE.

Optionally, the SRS resource set may be one periodic SRS resource set, or one semi-persistent SRS resource set, or one aperiodic SRS resource set. In an embodiment of the present disclosure, one or more single-port SRS resources are in an SRS resource set.

Each first uplink data transmission layer corresponds to the first SRI mapping table, and the SRI mapping table includes a corresponding relationship between an SRI index value and an SRS resource combination, namely, the SRI index value can be indexed to a corresponding SRS resource combination. The SRS resource combination includes one or more SRS resources in a SRS resource set configured by the network device for the terminal device.

In an embodiment of the present disclosure, the maximum number of physical uplink shared channel (PUSCH) transmission layers is increased to 8 layers, then the maximum number of uplink data transmission layers supported by the terminal device is Lₘₐₓ=8, and the existed first SRI mapping table does not cover the 5th layer to the 8th layer of the uplink data transmission layers, while in order to be able to support the uplink data transmission layers of a maximum of 8 layers, the existed first SRI mapping table needs to be extended, and uplink data transmission capable of covering the 5th layer to the 8th layer of the uplink data transmission layers is obtained, so as to support a maximum of 8 layers.

Optionally, the network device determines a number of newly added second uplink data transmission layer(s) and a configuration number set corresponding to the sounding reference signal (SRS) resource set configured to the terminal device based on Lₘₐₓ, the maximum number of uplink data transmission layers, and a number of existed first uplink data transmission layer(s). The configuration number set includes N_{SRS}, a number of SRS resource(s) configured in the SRS resource set. In an embodiment of the present disclosure, when the maximum number of physical uplink shared channel (PUSCH) transmission layers is increased to 8 layers, N_{SRS}, the number of configurable SRS resource(s) in the SRS resource set, increases from four configurable SRS resources to eight configurable SRS resources.

Furthermore, the network device extends the first SRI mapping table based on the number of second uplink data transmission layer(s) and the configuration number set, and the second SRI mapping table which can cover the 1st layer to the 8th layer of the uplink data transmission layers is obtained.

As a possible implementation, the first SRI mapping table can be extended based on Lₘₐₓ, the maximum number of uplink data transmission layers, and the configuration number set, and one SRI mapping table corresponding to each of the uplink data transmission layer(s) is obtained, and the extended SRI mapping table includes an SRS resource combination corresponding to each N_{SRS} in the configuration number set and an index value corresponding to the SRS resource combination. That is, eight SRI mapping tables are configured, and each SRI mapping table includes corresponding SRS resource combinations in cases of N_{SRS}=1/2/3/4/5/6/7/8 and SRI index values corresponding to the SRS resource combinations. Note that the extended SRI mapping table corresponding to each of the uplink data transmission layer(s) is a second SRI mapping table.

As another possible implementation, the first SRI mapping table is extended based on Lₘₐₓ, the maximum number of uplink data transmission layers, and the configuration number set, and the second SRI mapping table including a part of the SRI mapping relationships is obtained. In some implementations, the second SRI mapping table may include some of the contents of all the SRI mapping relationship corresponding to each of the uplink data transmission layers. For example, a part can be selected from an extended SRI mapping table corresponding to each of the uplink data transmission layer(s) to constitute a restricted second SRI mapping table. In other implementations, the second SRI mapping table may include a part of the mapping relationships among all the SRI mapping relationships corresponding to one of the numbers of uplink data transmission layer(s), namely, the second SRI mapping table is one SRI mapping sub-table formed by a part of the mapping relationships corresponding to one of the numbers of uplink data transmission layer(s), so that signaling overhead of the SRI can be saved.

In step S22, a first SRS resource combination measured from an SRS resource set is indicated to the terminal device based on the second SRI mapping table, the first SRS resource combination indicates a pre-encoding matrix for PUSCH transmission, and the first SRS resource combination includes at least one single-port SRS resource.

In an embodiment of the present disclosure, after acquiring the SRS resource set configured by the network device, the terminal device may perform pre-encoding on the SRS resource(s) configured in the SRS resource set based on an initial pre-encoding matrix, and send the pre-encoded SRS resource(s) to the network device. The pre-encoded SRS resource can be used for acquiring channel state information (CSI), and then acquiring channel estimation information. The channel estimation information can reflect scheduling information such as channel conditions, multi-user interference conditions and/or channel noise.

It should be noted that a non-codebook uplink transmission scheme is also a spatial multiplexing technique, which differs from codebook based uplink transmission in that its pre-encoding is obtained based on a certain criterion, rather than determining the pre-encoding in a restricted candidate value based on a fixed codebook. If reciprocity of the uplink and downlink channels exists, the terminal can calculate downlink channel information based on the channel reciprocity and obtain the uplink pre-encoding matrix. If the channel reciprocity is good enough, the terminal can obtain more accurate pre-encoding through the downlink channel. Compared with the codebook based transmission scheme, the terminal can save overhead of pre-encoding indication and obtain better performance.

Optionally, the network device configures an associated downlink channel state information-reference signal (CSI-RS) resource to the terminal device and sends the downlink CSI-RS resource to the terminal device, and accordingly, while the terminal device can determine the initial pre-encoding matrix based on the downlink CSI-RS resource. It should be noted that the pre-encoding matrix for the actual PUSCH transmission in the present disclosure is selected from the initial pre-encoding matrix.

Accordingly, the network device can receive the pre-encoded SRS resource to perform channel estimation and acquire channel estimation information, and since the channel estimation information can reflect channel conditions, multi-user interference conditions and/or channel noise, a first SRS resource combination for the actual PUSCH transmission is determined from the SRS resource set configured for the terminal device. Furthermore, the network device can determine the pre-encoding matrix for PUSCH transmission based on the first SRS resource combination, and determine a TRI corresponding to the pre-encoding matrix based on the number of resource(s) in the first SRS resource combination, namely, the network device selects the first SRS resource combination from the SRS resource set based on the pre-encoded SRS resource, and determines the pre-encoding matrix for PUSCH transmission and the TRI corresponding to the pre-encoding matrix for PUSCH transmission. The TRI can indicate the number of third uplink data transmission layer(s) for PUSCH transmission.

The network device may determine a SRI mapping relationship corresponding to the number of third uplink data transmission layer(s) from the second SRI mapping table based on the number of third uplink data transmission layer(s), and determine the SRI index value corresponding to the first SRS resource combination from the SRI mapping relationship. The network device indicates the first SRS resource combination to the terminal device via the SRI index value, so as to indicate that the terminal device determines the pre-encoding matrix for the actual PUSCH transmission according to the first SRS resource combination.

In embodiments of the present disclosure, the existed first SRI mapping table is extended based on Lₘₐₓ, the maximum number of uplink data transmission layers, so that the extended second SRI mapping table fills a blank of an SRI mapping relationship corresponding to the newly added number of uplink data transmission layers and newly added N_{SRS}, and provides a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

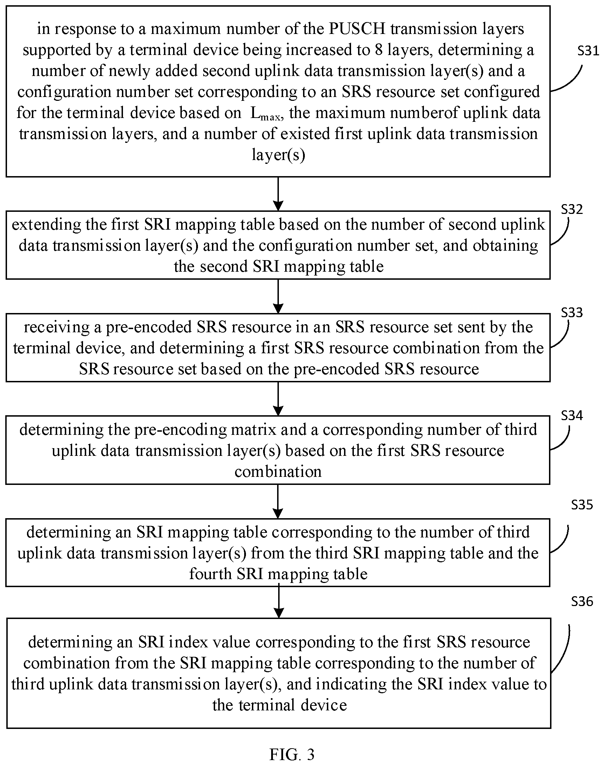

Reference is now made to FIG. 3, FIG. 3is a flow chart of a method of sending information for non-codebook based PUSCH provided by an embodiment of the present disclosure. As shown in FIG. 3, the method is performed by a network device, and may include, but is not limited to, the following steps.

In step S31, in response to that a maximum number of physical uplink shared channel PUSCH transmission layers supported by a terminal device is increased to 8 layers, a number of newly added second uplink data transmission layer(s) and a configuration number set corresponding to a SRS resource set configured for the terminal device are determined based on Lₘₐₓ, a maximum number of uplink data transmission layers supported by the terminal device and a number of existed first uplink data transmission layer(s).

With regard to the process of sending and configuring the SRS resource set, reference can be made to the relevant contents of the above-mentioned embodiments, and the description thereof will not be repeated here.

It should be noted that the configuration number set includes N_{SRS}, a number of SRS resource(s) configured in the SRS resource set. In embodiments of the present disclosure, when the maximum number of physical uplink shared channel (PUSCH) transmission layers is increased to 8 layers, N_{SRS}, the number of configurable SRS resource(s) in the SRS resource set increases from four configurable SRS resources to eight configurable SRS resource(s). Namely, the configuration number set includes an existed first candidate number and a newly added second candidate number, and the first candidate number includes 1 to 4, and the newly added second candidate number includes 5 to 8.

In step S32, the first SRI mapping table is extended based on the number of second uplink data transmission layer(s) and the configuration number set, and the second SRI mapping table is obtained.

For each of the first uplink data transmission layer(s), a first mapping relationship between the SRI index value and the SRS resource combination is extended under the second candidate number, and the first SRI mapping table is extended based on the first mapping relationship, and the second SRI mapping table is obtained. That is, with regard to the 1st layer of uplink data transmission layers to the 4th layer of uplink data transmission layers, the first SRI mapping table already includes a mapping relationship between the SRI index value and the SRS resource combination under the first candidate number, namely, the first SRI mapping table already includes the mapping relationship between the SRI index value and the SRS resource combination in a case that N_{SRS}=1/2/3/4. In an embodiment of the present disclosure, for each of first uplink data transmission layer(s), the first mapping relationship between the SRI index value and the SRS resource combination under the second candidate number is extended, namely, the first mapping relationship between the SRI index value and the SRS resource combination in a case that N_{SRS}=5/6/7/8 is extended. As shown in Table 1, for the 1st layer, the first mapping relationship between the SRI index value and the SRS resource combination in a case that N_{SRS}=5/6/7/8 is added in Table 1.

**Table 1**

| SRI index value | SRI(s), N_{SRS}=5 | SRI index value | SRI(s), N_{SRS}=6 | SRI index value | SRI(s), N_{SRS}=7 | SRI index value | SRI(s), N_{SRS}=8 |
|---|---|---|---|---|---|---|---|
| 0 | 0 | 0 | 0 | 0 | 0 | 0 | 0 |
| 1 | 1 | 1 | 1 | 1 | 1 | 1 | 1 |
| 2 | 2 | 2 | 2 | 2 | 2 | 2 | 2 |
| 3 | 3 | 3 | 3 | 3 | 3 | 3 | 3 |
| 4 | 4 | 4 | 4 | 4 | 4 | 4 | 4 |
| 5 | | | 5 | 5 | 5 | 5 | 5 |
| 6 | | | | 6 | 6 | 6 | 6 |
| 7 | | | | | | 7 | 7 |

It will be understood that each element of Table 1 exists independently, and the elements are illustratively listed in the same table, which does not represent that all elements of the table must exist simultaneously as indicated in the table. The value of each element is independent of the value of any other element in Table 1. It will therefore be appreciated by a person skilled in the art that the value of each element in Table 1 is an independent embodiment.

Furthermore, the first SRI mapping table is extended based on the first mapping relationship, a third SRI mapping table of each of first uplink data transmission layer(s) is obtained, namely, the 1st layer to the 4th layer respectively have respective third SRI mapping tables, that is, the newly added first mapping relationship is combined with the mapping relationship in the existed first SRI mapping table, and the third SRI mapping table is obtained. In an embodiment of the present disclosure, the third SRI mapping table includes a mapping relationship between the SRI index value and the SRS resource combination with N_{SRS}=1/2/3/4/5/6/7/8. In an embodiment of the present disclosure, multiplexing the first SRI mapping table of the existed first uplink data transmission layer is realized.

For each of second uplink data transmission layer(s), a second mapping relationship between the SRI index value and the SRS resource combination under each candidate number in the configuration number set is extended, and a fourth SRI mapping table is obtained based on the second mapping relationship. That is, for the 5th layer of the uplink data transmission layers to the 8th layer of the uplink data transmission layers, there is no existed first SRI mapping table, and the second mapping relationship between the SRI index value and the SRS resource combination under each candidate number needs to be extended and configured for the 5th layer to the 8th layer, namely, the second mapping relationship between the SRI index value and the SRS resource combination in a case that N_{SRS}=1/2/3/4/5/6/7/8 is extended. Furthermore, the fourth SRI mapping table of each of second uplink data transmission layer(s) is obtained by extending the first SRI mapping table based on the second mapping relationship, namely, the 5th layer to the 8th layer have respective fourth SRI mapping tables, respectively.

The network device determines the third SRI mapping table and the fourth SRI mapping table as the second SRI mapping table, namely, the second SRI mapping table, as a set, includes the second SRI mapping table after each of first uplink data transmission layer(s) is extended, and also includes the fourth SRI mapping table after each of second uplink data transmission layer(s) is extended, while the second SRI mapping table includes a total of eight tables, which is the same as the value of the maximum number of uplink data transmission layers supported by the terminal device.

In step S33, a pre-encoded SRS resource in an SRS resource set sent by the terminal device is received, and a first SRS resource combination is determined from the SRS resource set based on the pre-encoded SRS resource.

In step S34, the pre-encoding matrix and a corresponding number of third uplink data transmission layer(s) are determined based on the first SRS resource combination.

The implementations of steps S33-S34 can be found in the description of the related contents of the above-described embodiments, which will not be described in detail herein.

In step S35, the SRI mapping table corresponding to the number of third uplink data transmission layer(s) is determined from the third SRI mapping table and the fourth SRI mapping table.

In an embodiment of the present disclosure, the third SRI mapping table and the fourth SRI mapping table respectively correspond to different numbers of uplink data transmission layers. After the number of third uplink data transmission layers is determined, the SRI mapping table corresponding to the number of third uplink data transmission layer(s) is determined from the third SRI mapping table and the fourth SRI mapping table. For example, if the number of the third uplink data transmission layer is 1, the second SRI mapping table corresponding to the 1st layer can be used as the SRI mapping table corresponding to the number of the third uplink data transmission layer.

In step S36, the SRI index value corresponding to the first SRS resource combination is determined from the SRI mapping table corresponding to the number of third uplink data transmission layer(s), and the SRI index value is indicated to the terminal device.

The SRI mapping table corresponding to the number of third uplink data transmission layer(s) includes mapping relationships between different SRS resource combinations and different SRI index values. In an embodiment of the present disclosure, the SRI index value corresponding to the first SRS resource combination can be determined from the SRI mapping table corresponding to the number of third uplink data transmission layer(s) based on the first SRS resource combination, namely, a serial number of the SRS resource in the first SRS resource combination and the N_{SRS} corresponding to the SRS resource set, and the SRI index value is indicated to the terminal device. Optionally, the SRI index value is indicated to the terminal device through an SRI indication field.

In embodiments of the present disclosure, the existed first SRI mapping table is extended based on Lₘₐₓ, the maximum number of uplink data transmission layers, so that the extended second SRI mapping table fills a blank of an SRI mapping relationship corresponding to the newly added number of uplink data transmission layers and newly added N_{SRS}, and provides a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

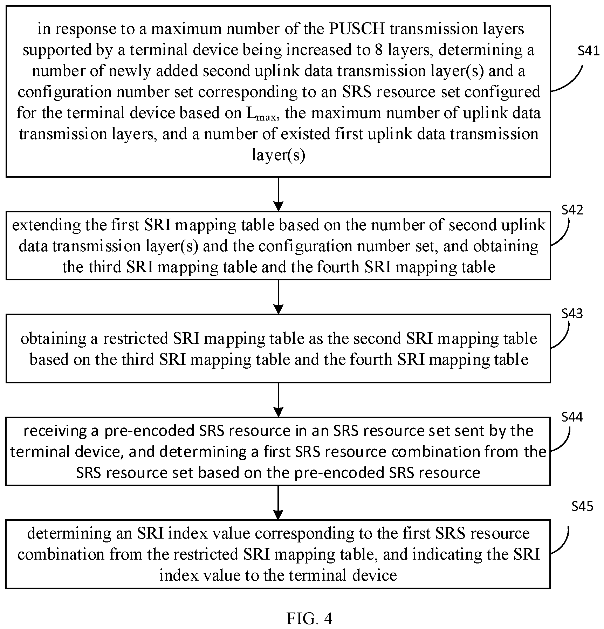

Reference is now made to FIG. 4, FIG. 4is a flow chart of a method of sending information for non-codebook based PUSCH provided by an embodiment of the present disclosure. As shown in FIG. 4, the method is performed by a network device, and may include, but is not limited to, the following steps.

In step S41, in response to that a maximum number of physical uplink shared channel (PUSCH) transmission layers supported by a terminal device is increased to 8 layers, a number of newly added second uplink data transmission layer(s) and a configuration number set corresponding to an SRS resource set configured for the terminal device are determined based on Lₘₐₓ, the maximum number of uplink data transmission layers supported by the terminal device and a number of existed first uplink data transmission layer(s).

The implementations of step S41 can be found in the description of the related contents of the above-described embodiments, which will not be described in detail herein.

In step S42, the first SRI mapping table is extended, and the third SRI mapping table and the fourth SRI mapping table are obtained based on the number of second uplink data transmission layer(s) and the configuration number set.

The implementations of step S42 can be found in the description of the related contents of the above-described embodiments, which will not be described in detail herein.

In step S43, a restricted SRI mapping table is obtained based on the third SRI mapping table and the fourth SRI mapping table and is taken as the second SRI mapping table.

Each of first uplink data transmission layer(s) corresponds to one second SRI mapping table. The second SRI mapping includes a mapping relationship between the SRI index value and the SRS resource combination corresponding to each case of N_{SRS}=1/2/3/4/5/6/7/8. Each of second uplink data transmission layer(s) corresponds to one fourth SRI mapping table, and the fourth SRI mapping table includes a mapping relationship between the SRI index value and the SRS resource combination corresponding to each case of N_{SRS}=1/2/3/4/5/6/7/8.

In embodiments of the present disclosure, a third mapping relationship between a part of the SRI index values and the SRS resource combination is selected from the second SRI mapping table corresponding to the first uplink data transmission layer(s), and a fourth mapping relationship between a part of the SRI index values and the SRS resource combination is selected from the fourth SRI mapping table corresponding to each of second uplink data transmission layer(s). The network device generates the restricted SRI mapping table based on the selected third mapping relationship and the selected fourth mapping relationship, and the restricted SRI mapping table is determined to be the extended second SRI mapping table in an embodiment of the present disclosure.

For example, several mapping relationships can be selected under each N_{SRS} from each third SRI mapping table and each fourth SRI mapping table, to form the restricted SRI table, and a selection rule can be based on a protocol agreement or a high-layer indication. As another example, mapping relationships between 32 SRI index values and the SRS resource combinations can be taken from each third SRI mapping table and each fourth SRI mapping table, thus requiring a maximum of 5 bits to indicate the SRI. In addition, for example, the selection can be performed in consideration of each N_{SRS}, or in consideration of a part of the N_{SRS}s, or in consideration of the number of each of uplink data transmission layer(s) or in consideration of a part of the uplink data transmission layer(s). With regard to the selection rule, the present disclosure does not make a limitation. Table 2 below provides a schematic table of a restricted SRI mapping table.

**Table 2**

| SRI index value | SRI(s), N_{SRS}=2 | SRI index value | SRI(s), N_{SRS}=3 | SRI index value | SRI(s), N_{SRS} =i | SRI index value | SRI(s), N_{SRS}=8 |
|---|---|---|---|---|---|---|---|
| 0 | 0 | 0 | 0 | | | 0 | 0 |
| 1 | 1 | 1 | 1 | | | 1 | 1 |
| 2 | 0,1 | 2 | 2 | | | 2 | 2 |
| 3 | reserved | 3 | 0,1 | | | 3 | 3 |
| | | 4 | 0,2 | | | 4 | 4 |
| | | 5 | 1,2 | | | 5 | 5 |
| | | 6 | 0, 1, 2 | | | 6 | 6 |
| | | 7 | reserved | | | 7 | 7 |
| | | | | | | 8 | 0,1 |
| | | | | | | 9 | 0,2 |
| | | | | | | 10 | 0,3 |
| | | | | | | 11 | 1,2 |
| | | | | | | 12 | 1,3 |
| | | | | | | 13 | 2,3 |
| | | | | | | 14 | 0, 1, 2 |
| | | | | | | 15 | 0, 1, 3 |
| | | | | | | 16 | 0, 2, 3 |
| | | | | | | 17 | 1,2,3 |
| | | | | | | 18 | 0, 1, 2,3 |
| | | | | | | 20 | 0, 1,2,3,4 |
| | | | | | | 21 | 0, 1, 2, 3, 5 |
| | | | | | | 22 | 0, 1,2,3,6 |
| | | | | | | 23 | 0, 1, 2, 4, 5 |
| | | | | | | 24 | 0, 1, 2, 3, 4,5 |
| | | | | | | 25 | 0, 1, 2, 3, 4,6 |
| | | | | | | 26 | 0, 1, 2, 3, 5,6 |
| | | | | | | 27 | 0, 1, 2, 3, 4, 5, 6 |
| | | | | | | 28 | 0, 1, 2, 3, 5, 6, 7 |
| | | | | | | 29 | 0, 1, 2, 3, 4, 6, 7 |
| | | | | | | 30 | 0, 1, 2, 3, 4, 5, 6,7 |
| | | | | | | 31 | reserved |

It will be understood that each element of Table 2 exists independently, and that the elements are illustratively listed in the same table, which does not represent that all elements of the table must exist simultaneously as indicated in the table. The value of each element is independent of the value of any other element in Table 2. It will therefore be appreciated by a person skilled in the art that the value of each element in Table 2 is an independent embodiment.

In step S44, a pre-encoded SRS resource in an SRS resource set sent by the terminal device is received, and a first SRS resource combination is determined from the SRS resource set based on the pre-encoded SRS resource.

With regard to the process of the terminal device sending the pre-encoded SRS resource in the SRS resource set to the network device, reference can be made to the relevant contents of the above-mentioned embodiments, and the description thereof will not be repeated here.

In an embodiment of the present disclosure, the network device selects the first SRS resource combination from the SRS resource set based on the pre-encoded SRS resource, and acquires an SRI index value corresponding to the first SRS resource combination from the restricted SRI mapping table when determining that the first SRS resource combination is present in the restricted SRI mapping table. When determining that the first SRS resource combination is absent in the restricted SRI mapping table, it is necessary to re-select a SRS resource combination being present in the restricted SRI mapping table and update the re-selected SRS resource combination as the first SRS resource combination, namely, to determine the re-selected SRS resource combination as the first SRS resource combination. That is, the first SRS resource combination selected by the network device based on the pre-encoded SRS resource needs to be the SRS resource combination being present in the restricted SRI mapping table.

In step S45, the SRI index value corresponding to the first SRS resource combination is determined from the restricted SRI mapping table, and the SRI index value is indicated to the terminal device.

The restricted SRI mapping table includes mapping relationships between different SRS resource combinations and different SRI index values. In an embodiment of the present disclosure, the SRI index value corresponding to the first SRS resource combination can be determined from the restricted SRI mapping table based on the first SRS resource combination, namely, serial numbers of the SRS resources in the first SRS resource combination and the N_{SRS} corresponding to the SRS resource set, and the SRI index value is indicated to the terminal device.

Optionally, the SRI index value is indicated to the terminal device through an SRI indication field. Optionally, the SRI index value can also indicate to the terminal device a TRI corresponding to the pre-encoding matrix for the actual PUSCH transmission, and the TRI indicates the number of third uplink data transmission layer(s) for the actual PUSCH transmission.

Optionally, the network device may send the restricted SRI mapping table to the terminal device via a first high-layer signaling. Optionally, the network device may also instruct the terminal device to update the restricted SRI mapping table based on the second high-layer signaling, and optionally may update all or part of the mapping relationships within the restricted SRI mapping table. The first high-layer signaling and the second high-layer signaling may include RRC signaling and/or Media access control-control element (MAC-CE) signaling. For example, the restricted SRI mapping table may be sent to the terminal device via the RRC signaling, or when the restricted SRI mapping table needs to be updated, all of the mapping relationships or part of the mapping relationships of the restricted SRI mapping table is configured or updated via the MAC-CE signaling. Optionally, a new SRI mapping sub-table is issued by means of the RRC signaling to update the first SRI mapping sub-table in whole. Optionally, the MAC-CE signaling carries mapping relationships between one or more SRS resource combinations and the SRI index value(s), and the restricted SRI mapping table is updated based on these mapping relationships. For example, these mapping relationships can be added to the restricted SRI mapping table, and can also be used to replace some existed mapping relationships in the restricted SRI mapping table. The replaced mapping relationship may be indicated by a high-layer signaling.

In embodiments of the present disclosure, the existed first SRI mapping table is extended based on Lₘₐₓ, the maximum number of uplink data transmission layers, so that the extended second SRI mapping table fills a blank of an SRI mapping relationship corresponding to the newly added number of uplink data transmission layers and newly added N_{SRS}, and provides a fundamental basis for enhancing uplink transmission capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

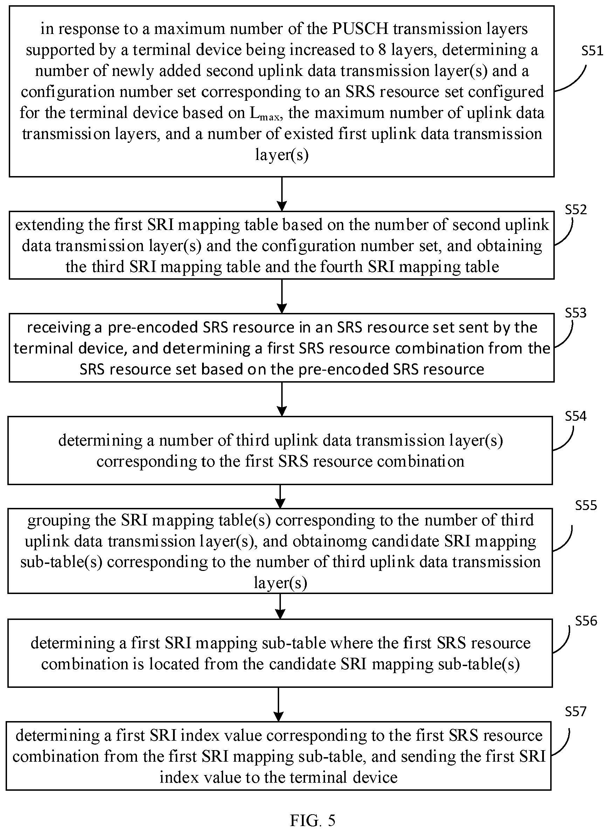

Reference is now made to FIG. 5, FIG. 5is a flow chart of a method of sending information for non-codebook based PUSCH provided by an embodiment of the present disclosure. As shown in FIG. 5, the method is performed by a network device, and may include, but is not limited to, the following steps.

In step S51, in response to that a maximum number of physical uplink shared channel (PUSCH) transmission layers supported by a terminal device is increased to 8 layers, a number of newly added second uplink data transmission layer(s) and a configuration number set corresponding to a SRS resource set configured for the terminal device are determined based on Lₘₐₓ, a maximum number of uplink data transmission layers supported by the terminal device and a number of existed first uplink data transmission layer(s).

In step S52, the first SRI mapping table is extended based on the number of second uplink data transmission layer(s) and the configuration number set, and the third SRI mapping table and the fourth SRI mapping table are obtained.

In step S53, a pre-encoded SRS resource in the SRS resource set sent by the terminal device is received, and a first SRS resource combination is determined from the SRS resource set based on the pre-encoded SRS resource.

In step S54, a number of third uplink data transmission layer(s) corresponding to the first SRS resource combination is determined.

The implementations of steps S51 to S54 can be found in the description of the related contents of the above-described embodiments, which will not be described in detail herein.

In step S55, the SRI mapping table(s) corresponding to the number of third uplink data transmission layer(s) are grouped, candidate SRI mapping sub-table(s) corresponding to the number of third uplink data transmission layer(s) is obtained.

The SRI mapping table corresponding to the third number of uplink data transmission layer(s) is one of the third SRI mapping table and the fourth SRI mapping table, and after the SRI mapping table corresponding to the third number of uplink data transmission layer(s), the SRI mapping table can be grouped and multiple candidate SRI mapping sub-tables are obtained.

For example, grouping may be performed according to N_{SRS} with one or more N_{SRS}s as one group and a plurality of candidate SRS mapping sub-tables are obtained. Alternatively, the SRI mapping table corresponding to the number of third uplink data transmission layer(s) is grouped by rows, a plurality of candidate SRI mapping sub-tables. For example, each candidate SRI candidate sub-table may include the same number of rows and may also include different numbers of rows. Or the SRI mapping table corresponding to the number of third uplink data transmission layer(s) is grouped by columns and a plurality of candidate SRI mapping sub-tables are obtained. For example, each candidate SRI candidate sub-table may include the same number of columns or may include different numbers of columns. In the present disclosure, the specific grouping manner is not limited.

In step S56, a first SRI mapping sub-table where the first SRS resource combination is located is determined from the candidate SRI mapping sub-table(s).

The first SRI mapping sub-table where the first SRS resource combination is located can be determined from a plurality of candidate SRI mapping sub-tables based on a serial number of the SRS resource included in the first SRS resource combination and the N_{SRS} corresponding to the SRS resource set. For example, a first candidate SRS mapping sub-table that corresponds to the N_{SRS} corresponding to the SRS resource set can be determined from a plurality of candidate SRI mapping sub-tables, and then the first SRS mapping sub-table including the first SRS resource combination is determined from the first candidate SRS mapping sub-table based on the serial number of the SRS resource included in the first SRS resource combination. For another example, a second candidate SRS mapping sub-table including the first SRS resource combination can be determined from a plurality of candidate SRI mapping sub-tables based on the serial number of the SRS resource included in the first SRS resource combination, and the first SRS mapping sub-table can be determined from the second candidate SRS mapping sub-table based on the N_{SRS} corresponding to the SRS resource set.

In step S57, a first SRI index value corresponding to the first SRS resource combination is determined from the first SRI mapping sub-table and sent to the terminal device.

The first SRI mapping sub-table includes mapping relationships between different SRS resource combinations and different SRI index values. In an embodiment of the present disclosure, a SRI index value corresponding to the first SRS resource combination can be determined from the first SRI mapping sub-table based on the first SRS resource combination, namely, the serial number of the SRS resource in the first SRS resource combination, and the SRI index value is indicated to the terminal device.

Optionally, the SRI index value is indicated to the terminal device through an SRI indication field. Optionally, the SRI index value may also be used to indicate to the terminal device the number of third uplink data transmission layer(s) corresponding to the pre-encoding matrix for the actual PUSCH transmission.

Optionally, the network device may send the first SRI mapping sub-table to the terminal device via a third high-layer signaling. Optionally, the network device may instruct the terminal device to update the first SRI mapping sub-table based on the fourth high-layer signaling. For example, all or part of the mapping relationships within the first SRI mapping sub-table may be updated. The third high-layer signaling and the fourth high-layer signaling may include RRC signaling and/or MAC-CE signaling. For example, the first SRI mapping sub-table may be sent to the terminal device via the RRC signaling, or when the first SRI mapping sub-table needs to be updated, all or part of the mapping relationships in the first SRI mapping sub-table is configured or updated via the RRC signaling or the MAC-CE signaling. Optionally, a new SRI mapping sub-table is issued by means of the RRC signaling to update the first SRI mapping sub-table in whole. Optionally, the MAC-CE signaling carries mapping relationships between one or more SRS resource combinations and the SRI index value(s), and the first SRI mapping sub-table is updated based on these mapping relationships. For example, these mapping relationships can be added to the first SRI mapping sub-table, and can also be used to replace some existed mapping relationships in the first SRI mapping sub-table. The replaced mapping relationship may be indicated by a high-layer signaling.

In embodiments of the present disclosure, the existed first SRI mapping table is extended based on Lₘₐₓ, the maximum number of uplink data transmission layers, so that the extended second SRI mapping table fills a blank of an SRI mapping relationship corresponding to the newly added number of uplink data transmission layers and newly added N_{SRS}, and provides a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

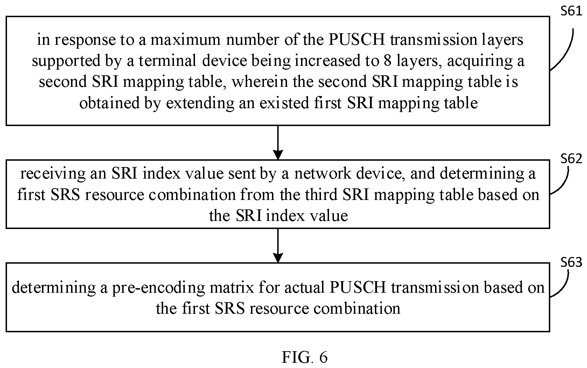

Reference is now made to FIG. 6, FIG. 6is a schematic flow diagram of a method of sending information for non-codebook based PUSCH provided by an embodiment of the present disclosure. As shown in FIG. 6, the method is performed by a terminal device, and may include, but is not limited to, the following steps.

In step S61, in response to a maximum number of physical uplink shared channel (PUSCH) transmission layers supported by the terminal device being increased to 8 layers, a second SRI mapping table is acquired, in which, the second SRI mapping table is obtained by extending an existed first SRI mapping table.

In an embodiment of the present disclosure, the number of uplink data transmission layers of the terminal device is increased to 8 layers, that is, the terminal device can support the maximum PUSCH transmission to be increased to 8 layers, and thus can be used to support a higher uplink transmission rate comparable to downlink transmission rate. In embodiments of the present disclosure, a first uplink data transmission layer is an uplink data transmission layer corresponding to PUSCH shared channel transmission originally supported by a single terminal, and a second uplink data transmission layer is a newly added uplink data transmission layer based on the original first uplink data transmission layer. For example, the original uplink data transmission layers corresponding to the PUSCH are layers 1-4, and the layers 1-4 are the first uplink data transmission layers. With newly increasing to 8 layers in the present disclosure, the second uplink data transmission layer are layer 5 to layer 8.

Each first uplink data transmission layer corresponds to the first SRI mapping table, and the SRI mapping table includes a corresponding relationship between an SRI index value and an SRS resource combination, namely, the SRI index value can be indexed to a corresponding SRS resource combination. The SRS resource combination includes one or more SRS resources in a SRS resource set configured by the network device for the terminal device.

In an embodiment of the present disclosure, the maximum number of physical uplink shared channel (PUSCH) transmission layers is increased to 8 layers, then the maximum number of uplink data transmission layers supported by the terminal device is Lₘₐₓ=8, and the existed first SRI mapping table does not cover the 5th layer to the 8th layer of the uplink data transmission layers, while in order to be able to support the uplink data transmission layers of a maximum of 8 layers, the existed first SRI mapping table needs to be extended, uplink data transmission capable of covering the 5th layer to the 8th layer of the uplink data transmission layers is obtained so as to support a maximum of 8 layers.

Optionally, the network device determines a number of newly added second uplink data transmission layer(s) and a configuration number set corresponding to the sounding reference signal (SRS) resource set configured to the terminal device based on Lₘₐₓ, the maximum number of uplink data transmission layers, and a number of existed first uplink data transmission layer(s). The configuration number set includes N_{SRS}, a number of SRS resource(s) configured in the SRS resource set. In an embodiment of the present disclosure, when the maximum number of physical uplink shared channel (PUSCH) transmission layers is increased to 8 layers, N_{SRS}, the number of configurable SRS resource(s) in the SRS resource set increases from four configurable SRS resources to eight configurable SRS resources.

Furthermore, the network device extends the first SRI mapping table based on the number of second uplink data transmission layer(s) and the configuration number set, and the second SRI mapping table which can cover the 1st layer to the 8th layer of the uplink data transmission layers is obtained.

As a possible implementation, the first SRI mapping table can be extended based on Lₘₐₓ, the maximum number of uplink data transmission layers, and the configuration number set, and one SRI mapping table corresponding to each of the uplink data transmission layer(s) is obtained, and the extended SRI mapping table includes an SRS resource combination corresponding to each N_{SRS} in the configuration number set and an index value corresponding to the SRS resource combination. That is, eight SRI mapping tables are configured, and each SRI mapping table includes corresponding SRS resource combinations in cases of N_{SRS}=1/2/3/4/5/6/7/8 and SRI index values corresponding to the SRS resource combinations. Note that the extended SRI mapping table corresponding to each of the uplink data transmission layer(s) is a second SRI mapping table.

As another possible implementation, a second SRI mapping table including a part of the SRI mapping relationship determined by the network device may be received. The second SRI mapping table may include some of the contents of all the SRI mapping relationship corresponding to each of the uplink data transmission layers. For example, a part can be selected from an extended SRI mapping table corresponding to each of the uplink data transmission layer(s) to constitute a restricted second SRI mapping table. As another example, the second SRI mapping table may include a part of the mapping relationship among all the SRI mapping relationship corresponding to one of the numbers of uplink data transmission layer(s), namely, the second SRI mapping table is one SRI mapping sub-table formed by a part of the mapping relationship corresponding to one of the numbers of uplink data transmission layer(s).

Optionally, the terminal device may extend the first SRI mapping table based on Lₘₐₓ, the maximum number of uplink data transmission layers, and the configuration number set, and the second SRI mapping table including a part of the SRI mapping relationship is obtained. In some implementations, the second SRI mapping table may include some of the contents of all the SRI mapping relationship corresponding to each of the uplink data transmission layers. For example, a part can be selected from an extended SRI mapping table corresponding to each number of uplink data transmission layer(s) to constitute a restricted second SRI mapping table.

In step S62, an SRI index value sent by a network device is received, and the first SRS resource combination is determined from the second SRI mapping table based on the SRI index value.

The first SRS resource combination is a combination formed by SRS resource(s) selected from an SRS resource set and includes at least one single-port SRS resource.

The terminal device acquires one SRS resource set with a function being non-codebook based from the network device via the high-layer signaling. For example, the terminal device can receive RRC signaling or MAC-CE signaling, and acquires the SRS resource set configured for the terminal device by the network device from the RRC signaling or MAC-CE signaling. Optionally, the configuration or reconfiguration can be performed via the RRC, and part of or all of the configurations can also be updated via the MAC-CE.

Optionally, the time domain characteristic of the SRS resource set is periodic, semi-persistent or non-periodic, that is, the SRS resource set may be one periodic SRS resource set, or one semi-persistent SRS resource set, or one aperiodic SRS resource set. In an embodiment of the present disclosure, one or more single-port SRS resource(s) are in an SRS resource set.

In an embodiment of the present disclosure, after acquiring the SRS resource set configured by the network device, the terminal device may perform pre-encoding on the SRS resource(s) configured in the SRS resource set based on an initial pre-encoding matrix, and send the pre-encoded SRS resource(s) to the network device. The pre-encoded SRS resource can be used for acquiring channel state information (CSI), and then acquiring channel estimation information. The channel estimation information can reflect scheduling information such as channel conditions, multi-user interference conditions and/or channel noise.

With regard to the process of the terminal device acquiring an initial pre-encoding matrix, reference can be made to the relevant contents of the above-mentioned embodiments, and the description thereof will not be repeated here.

With regard to the process of the network device determining the first SRS resource combination, the pre-encoding matrix and the corresponding number of third uplink data transmission layer(s) from the SRS resource set based on the pre-encoded SRS resource, reference can be made to the relevant contents contained in the above-mentioned embodiments, and the description thereof will not be repeated here.

Further, the network device may determine an SRI mapping relationship corresponding to the third number of uplink data transmission layer(s) from the second SRI mapping table based on the third number of uplink data transmission layers, and determine an SRI index value corresponding to the first SRS resource combination from the mapping relationship corresponding to the third number of uplink data transmission layers. The network device indicates the first SRS resource combination to the terminal device through the SRI index value.

Optionally, the terminal device receives the SRI issued by the network device through the high-layer signaling, and the SRI index value is indicated to the terminal device through the SRI indication field.

In step S63, a pre-encoding matrix for PUSCH transmission is determined based on the first SRS resource combination.

Optionally, the terminal device screens the initial pre-encoding matrix based on the first SRS resource combination, and the pre-encoding matrix for actual PUSCH transmission is obtained. In an embodiment of the present disclosure, the first SRS resource combination includes one or more single-port SRS resources, and the one or more single-port SRS resources are SRS resources selected by the network device in the SRS resource set and suitable for the PUSCH transmission. The terminal device determines a pre-encoding vector correspondingly used by the selected single-port SRS resource, and determines the pre-encoding matrix actually for the actual PUSCH transmission based on the selected pre-encoding vector correspondingly used by the single-port SRS resource. The pre-encoding vector is one vector of the initial pre-encoding matrix. Optionally, the pre-encoding vectors used by the SRS resource(s) in the first SRS resource combination are combined according to an order of serial number(s) of the SRS resource(s), and the pre-encoding matrix used by the actual PUSCH transmission is obtained.

By way of example, the initial pre-encoding matrix is H=[V₀, V₁, V₂, V₃, V₄, V₅, V₆, V₇], and the serial numbers of SRS resources are #0-#7, each SRS resource port corresponds to one pre-encoding vector, and, for example, SRS resource #0 corresponds to V₀, SRS resource #1 corresponds to Vi, SRS resource #2 corresponds to V₂, SRS resource #3 corresponds to V₃, and so on, while SRS resource #7 corresponds to V₇. If the terminal device determines from the second SRI mapping table that the first SRS resource combination includes SRS resource(s) with serial numbers of #0, #1, #4 and #5 based on the SRI index value, then V₀, V₁, V₄, and V₅ corresponding to these SRS resource(s) are combined, the pre-encoding matrix for the actual PUSCH transmission is obtained.

In embodiments of the present disclosure, the existed first SRI mapping table is extended, so that the extended second SRI mapping table can fill a blank of an SRI mapping relationship corresponding to the newly added number of uplink data transmission layers and newly added N_{SRS} via the extended SRI mapping table, and provide a fundamental basis for enhancing uplink transmission capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

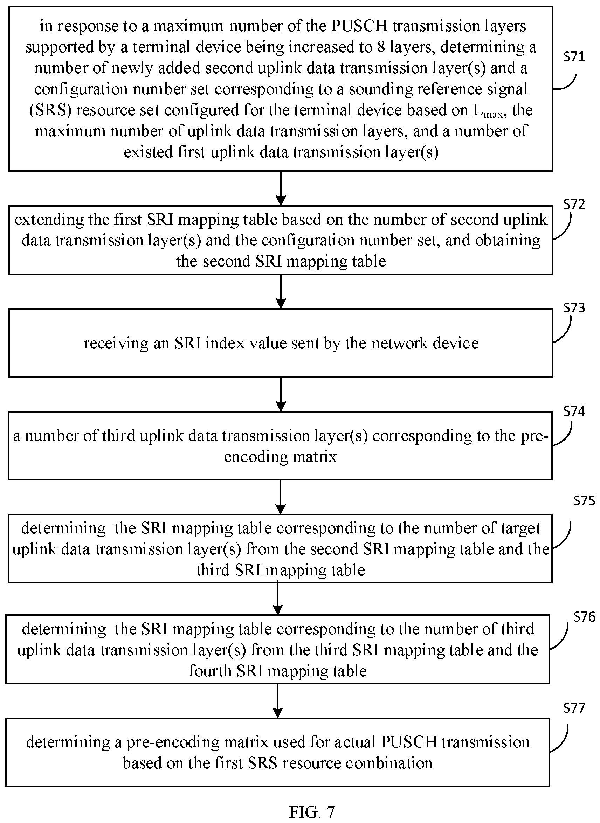

Reference is now made to FIG. 7, FIG. 7is a flow chart of a method of receiving information for non-codebook based PUSCH provided by an embodiment of the present disclosure. As shown in FIG. 7, the method is performed by a terminal device, and may include, but is not limited to, the following steps.

In step S71, in response to a the maximum number of physical uplink shared channel PUSCH transmission layers supported by a terminal device being increased to 8 layers, a number of newly added second uplink data transmission layer(s) and a configuration number set corresponding to an SRS resource set configured for the terminal device are determined based on Lₘₐₓ, a maximum number of uplink data transmission layers, supported by the terminal device, and a number of existed first uplink data transmission layer(s).

It should be noted that the configuration number set includes a number N_{SRS} of SRS resource(s) configured in the SRS resource set. In embodiments of the present disclosure, when the maximum number of physical uplink shared channel (PUSCH) transmission layers is increased to 8 layers, N_{SRS}, the number of configurable SRS resource(s) in the SRS resource set increases from four configurable SRS resources to eight configurable SRS resource(s). Namely, the configuration number set includes an existed first candidate number and a newly added second candidate number, and the first candidate number includes 1 to 4, and the newly added second candidate number includes 5 to 8.

In step S72, the first SRI mapping table is extended based on the number of second uplink data transmission layer(s) and the configuration number set, and the second SRI mapping table is obtained.

For each of the first uplink data transmission layer(s), a first mapping relationship between the SRI index value and the SRS resource combination is extended under the second candidate number, and the first SRI mapping table is extended based on the first mapping relationship, and the second SRI mapping table is obtained. That is, with regard to the 1st layer of uplink data transmission layers to the 4th layer of uplink data transmission layers, the first SRI mapping table already includes a mapping relationship between the SRI index value and the SRS resource combination under the first candidate number, namely, the first SRI mapping table already includes the mapping relationship between the SRI index value and the SRS resource combination in a case that N_{SRS}=1/2/3/4. In an embodiment of the present disclosure, for each of first uplink data transmission layer(s), the first mapping relationship between the SRI index value and the SRS resource combination under the second candidate number is extended, namely, the first mapping relationship between the SRI index value and the SRS resource combination in a case that N_{SRS}=5/6/7/8 is extended.

Furthermore, the first SRI mapping table is extended based on the first mapping relationship, and a third SRI mapping table of each of first uplink data transmission layer(s) is obtained, namely, the 1st layer to the 4th layer respectively have respective third SRI mapping tables, that is, the newly added first mapping relationship is combined with the mapping relationship in the existed first SRI mapping table, and the third SRI mapping table is obtained. In an embodiment of the present disclosure, the third SRI mapping table includes a mapping relationship between the SRI index value and the SRS resource combination with N_{SRS}=1/2/3/4/5/6/7/8. In an embodiment of the present disclosure, multiplexing the first SRI mapping table of the existed first uplink data transmission layer is realized.

For each of second uplink data transmission layer(s), a second mapping relationship between the SRI index value and the SRS resource combination under each candidate number in the configuration number set is extended, and a fourth SRI mapping table is obtained based on the second mapping relationship. That is, with regard to the 5th layer of the uplink data transmission layers to the 8th layer of the uplink data transmission layers, there is no existed first SRI mapping table, and the second mapping relationship between the SRI index value and the SRS resource combination under each candidate number needs to be extended and configured for the 5th layer to the 8th layer, namely, the second mapping relationship between the SRI index value and the SRS resource combination in a case that N_{SRS}=1/2/3/4/5/6/7/8 is extended. Furthermore, the fourth SRI mapping table of each of second uplink data transmission layer(s) is obtained by extending the first SRI mapping table based on the second mapping relationship, namely, the 5th layer to the 8th layer have respective fourth SRI mapping tables, respectively.

The terminal device determines the third SRI mapping table and the fourth SRI mapping table as the second SRI mapping table, namely, the second SRI mapping table , as a set, includes the second SRI mapping table after each of the first uplink data transmission layer(s) is extended, and also includes the fourth SRI mapping table after each of the second uplink data transmission layer(s) is extended, while the second SRI mapping table includes a total of eight tables, which is the same as the value of the maximum number of uplink data transmission layers supported by the terminal device.

In step S73, an SRI index value sent by the network device is received.

Optionally, the terminal device receives the SRS resource set configured by the network device, and performs pre-encoding on the SRS resources in the SRS resource set based on the initial pre-encoding matrix, and sends the pre-encoded SRS resource to the network device. For the specific process, reference can be made to the disclosure of the relevant contents in the above-mentioned embodiments, and the description thereof will not be repeated here.

The network device may indicate, to the terminal device, the SRI index value determined based on the first SRS resource combination through the SRI.

In step S74, a number of third uplink data transmission layer(s) corresponding to the pre-encoding matrix is determined.

Optionally, the SRI index value may indicate the number of third uplink data transmission layer(s) corresponding to the pre-encoding matrix, for example, a correspondence between each SRI index value and each number of uplink data transmission layer(s) is provided, and on the basis of the corresponding relationship, the corresponding number of third uplink data transmission layer(s) may be determined based on the SRI index value. Optionally, indication information (TRI) of the number of data transmission layer(s) indicated by the network device is received, and the third number of uplink data transmission layer(s) is determined based on the TRI.

In step S75, the SRI mapping table corresponding to the number of third uplink data transmission layer(s) is determined from the third SRI mapping table and the fourth SRI mapping table.

In an embodiment of the present disclosure, the third SRI mapping table and the fourth SRI mapping table respectively correspond to different numbers of uplink data transmission layers. After the number of third uplink data transmission layers is determined, the SRI mapping table corresponding to the number of third uplink data transmission layer(s) is determined from the third SRI mapping table and the fourth SRI mapping table. For example, if the number of the third uplink data transmission layer is 1, the second SRI mapping table corresponding to the 1st layer can be used as the SRI mapping table corresponding to the number of the third uplink data transmission layer.

In step S76, the SRS resource combination indicated by the SRI index value is determined from the SRI mapping table corresponding to the number of third uplink data transmission layer(s), and the SRS resource combination is determined as the first SRS resource combination.

The first SRS resource combination is a combination formed by SRS resource(s) selected from an SRS resource set and includes at least one single-port SRS resource.

The SRI mapping table corresponding to the number of third uplink data transmission layer(s) includes mapping relationships between different SRS resource combinations and different SRI index values. In an embodiment of the present disclosure, a first SRS resource combination corresponding to the SRI index value can be determined from the SRI mapping table corresponding to the number of third uplink data transmission layer(s) based on the SRI index value and the N_{SRS} corresponding to the SRS resource set.

In step S77, a pre-encoding matrix for actual PUSCH transmission is determined based on the first SRS resource combination.

The implementations of step S76 can be found in the description of the related contents of the above-described embodiments, which will not be described in detail herein.

In embodiments of the present disclosure, the existed first SRI mapping table is extended, so that the extended second SRI mapping table can fill a blank of an SRI mapping relationship corresponding to the newly added number of uplink data transmission layers and newly added N_{SRS} via the extended SRI mapping table, thereby providing a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

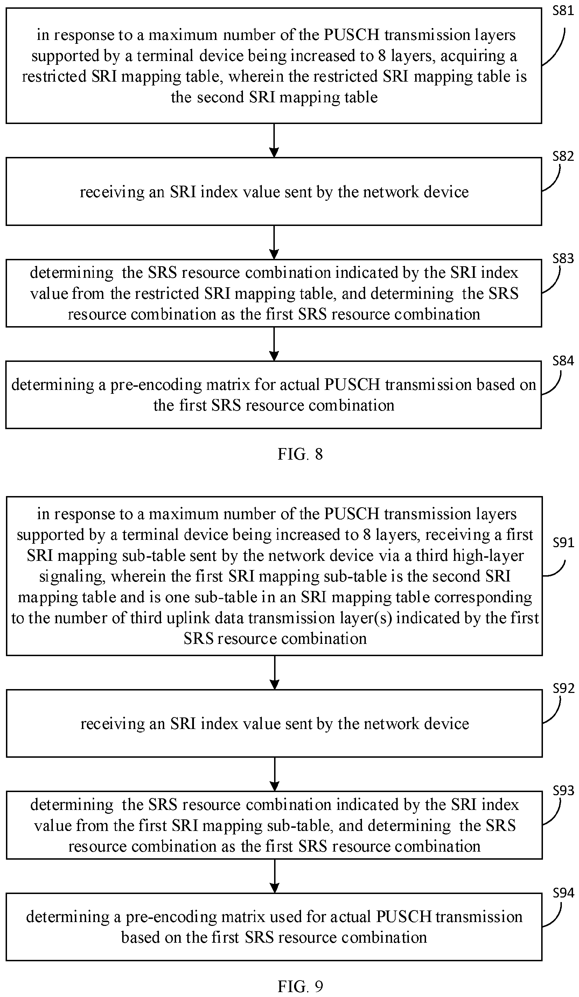

Reference is now made to FIG. 8, FIG. 8is a flow chart of a method of receiving information for non-codebook based PUSCH provided by an embodiment of the present disclosure. As shown in FIG. 8, the method is performed by a terminal device, and may include, but is not limited to, the following steps:
In step S81, in response to a maximum number of physical uplink shared channel PUSCH transmission layers supported by the terminal device being increased to 8 layers, a restricted SRI mapping table is acquired, in which the restricted SRI mapping table is the second SRI mapping table.

The restricted SRI mapping table includes a part of third mapping relationships selected from the third SRI mapping table and a part of fourth mapping relationships selected from a fourth SRI mapping table; and the second SRI mapping table is a mapping table for the number of existed first uplink data transmission layer(s), and the fourth SRI mapping table is a mapping table for the number of newly added second uplink data transmission layer(s).

With regard to the determination process of the third SRI mapping table and the fourth SRI mapping table, reference can be made to the relevant contents of the above-mentioned embodiments, and the description thereof will not be repeated here.

The explanation of the number of the first uplink data transmission layer(s) and the number of the second uplink data transmission layer(s) can be found in the description of the related contents of the above-described embodiments, which will not be described in detail herein.

As a possible implementation, the terminal device may select a part of the third SRI mapping relationships from the third SRI mapping table and a part of the fourth SRI mapping relationships from the fourth SRI mapping table based on an agreement, and determine the restricted SRI mapping table based on the selected third SRI mapping relationships and the selected fourth SRI mapping relationships. With regard to the explanation of the restricted SRI mapping table and the selection manner for selecting a part of the mapping relationships from the third SRI mapping table and the fourth SRI mapping table, reference can be made to the relevant contents of the above-mentioned embodiments, and the description thereof will not be repeated here.

As another possible implementation, the terminal device may receive the restricted SRI mapping table sent by the network via the first high-layer signaling. The first high-layer signaling and the second high-layer signaling may include RRC signaling and/or MAC-CE signaling.

Optionally, the terminal device may also update all or part of the contents of the restricted SRI mapping table via the second high-layer signaling, and, optionally, all or part of the mapping relationships within the restricted SRI mapping table may be updated. The first high-layer signaling and the second high-layer signaling may include RRC signaling and/or MAC-CE signaling. For example, the restricted SRI mapping table may be sent to the terminal device via the RRC signaling, or when the restricted SRI mapping table needs to be updated, all of the mapping relationships or part of the mapping relationships of the restricted SRI mapping table is configured or updated via the MAC-CE signaling. Optionally, a new SRI mapping sub-table is issued by means of the RRC signaling to update the first SRI mapping sub-table in whole. Optionally, the MAC-CE signaling carries mapping relationships between one or more SRS resource combinations and the SRI index value(s), and the restricted SRI mapping table is updated based on these mapping relationships. For example, these mapping relationships can be added to the restricted SRI mapping table, and can also be used to replace some existed mapping relationships in the restricted SRI mapping table. The replaced mapping relationship may be indicated by a high-layer signaling.

In step S82, an SRI index value sent by the network device is received.

The implementation of step S82 can be found in the description of the related contents of the above-described embodiments, which will not be described in detail herein.

In step S83, the SRS resource combination indicated by the SRI index value is determined from the restricted SRI mapping table, and the SRS resource combination is determined as the first SRS resource combination.

The first SRS resource combination is a combination formed by SRS resource(s) selected from an SRS resource set and includes at least one single-port SRS resource.

Optionally, the SRI index value may indicate the number of third uplink data transmission layer(s) corresponding to the pre-encoding matrix, for example, a correspondence between each SRI index value and each number of uplink data transmission layer(s) is provided, and based on the corresponding relationship, the corresponding number of third uplink data transmission layer(s) may be determined based on the SRI index value. Optionally, indication information (TRI) of the number of data transmission layer(s) indicated by the network device is received, and the third number of uplink data transmission layer(s) is determined based on the TRI.

In an embodiment of the present disclosure, the third SRI mapping table and the fourth SRI mapping table respectively correspond to different numbers of uplink data transmission layers. After the number of third uplink data transmission layers is determined, the SRI mapping table corresponding to the number of third uplink data transmission layer(s) is determined from the third SRI mapping table and the fourth SRI mapping table. For example, if the number of the third uplink data transmission layer is 1, the second SRI mapping table corresponding to the 1st layer can be used as the SRI mapping table corresponding to the number of the third uplink data transmission layer.

The SRI mapping table corresponding to the number of third uplink data transmission layer(s) includes mapping relationships between different SRS resource combinations and different SRI index values. In an embodiment of the present disclosure, a first SRS resource combination corresponding to the SRI index value can be determined from the SRI mapping table corresponding to the number of third uplink data transmission layer(s) based on the SRI index value and the N_{SRS} corresponding to the SRS resource set.

In step S84, a pre-encoding matrix for PUSCH transmission is determined based on the first SRS resource combination.

The implementation of step S85 can be found in the description of the related contents of the above-described embodiments, which will not be described in detail herein.

In embodiments of the present disclosure, the existed first SRI mapping table is extended, so that the extended second SRI mapping table can fill a blank of an SRI mapping relationship corresponding to the newly added number of uplink data transmission layers and newly added N_{SRS} via the extended SRI mapping table, thereby providing a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

Reference is now made to FIG. 9, FIG. 9is a flow chart of a method of receiving information for non-codebook based PUSCH provided by an embodiment of the present disclosure. As shown in FIG. 9, the method is performed by a terminal device, and may include, but is not limited to, the following steps.

In step S91, in response to a maximum number of physical uplink shared channel PUSCH transmission layers supported by the terminal device being increased to 8 layers, a first SRI mapping sub-table sent by the network device is received via a third high-layer signaling, in which, the first SRI mapping sub-table is the second SRI mapping table and is one sub-table in the SRI mapping table corresponding to the number of third uplink data transmission layer(s) indicated by the first SRS resource combination.

The terminal device can receive the first SRI mapping sub-table sent by the network through the third high-layer signaling. The third high-layer signaling may include RRC signaling and/or MCE-CE signaling.

Optionally, the terminal device may also update all or part of the contents of the restricted SRI mapping table via the fourth high-layer signaling, and, optionally, all or part of the mapping relationships within the restricted SRI mapping table may be updated. The first high-layer signaling and the second high-layer signaling may include RRC signaling and/or MAC-CE signaling. For example, the restricted SRI mapping table may be sent to the terminal device via the RRC signaling, and when the restricted SRI mapping table needs to be updated, all of the mapping relationships or part of the mapping relationships of the restricted SRI mapping table is configured or updated via the MAC-CE signaling. Optionally, a new SRI mapping sub-table is issued by means of RRC signaling to update the first SRI mapping sub-table in whole. Optionally, the MAC-CE signaling carries mapping relationships between one or more SRS resource combinations and the SRI index value(s), and the restricted SRI mapping table is updated based on these mapping relationships. For example, these mapping relationships can be added to the restricted SRI mapping table, and can also be used to replace some existed mapping relationships in the restricted SRI mapping table. The replaced mapping relationship may be indicated by a high-layer signaling.

In step S92, an SRI index value sent by the network device is received.

The implementations of step S92 can be found in the description of the related contents of the above-described embodiments, which will not be described in detail herein.

In step S93, the SRS resource combination indicated by the SRI index value is determined from the first SRI mapping sub-table, and the SRS resource combination is determined as the first SRS resource combination

The first SRS resource combination is a combination formed by SRS resource(s) selected from an SRS resource set and includes at least one single-port SRS resource.

The first SRI mapping sub-table includes mapping relationships between different SRS resource combinations and different SRI index values. In an embodiment of the present disclosure, the SRS resource combination indexed by the SRI index value is determined from the first SRI mapping sub-table and is determined as the first SRS resource combination.

In step S94, a pre-encoding matrix for PUSCH transmission is determined based on the first SRS resource combination.

The implementation of step S94 can be found in the description of the related contents of the above-described embodiments, which will not be described in detail herein.

In embodiments of the present disclosure, the existed first SRI mapping table is extended, so that the extended second SRI mapping table can fill a blank of an SRI mapping relationship corresponding to the newly added number of uplink data transmission layers and newly added N_{SRS} via the extended SRI mapping table, thereby providing a fundamental basis for enhancing uplink sending capability. Furthermore, the pre-encoding matrix required for the actual PUSCH transmission can be indicated to the terminal device based on the configured second SRI mapping table, which is beneficial to providing security, reliability and accuracy of the PUSCH transmission, and the pre-encoding matrix satisfying requirements of the PUSCH transmission can be selected to avoid resource conflicts with other terminal devices.

In the above-mentioned embodiments provided by the present disclosure, the method provided by the embodiments of the present disclosure is introduced from the perspective of the terminal device and the network device, respectively. In order to realize various functions in the method provided by the above-mentioned embodiments of the present disclosure, the terminal device and the network device may include a hardware structure and a software module, and implement the above-mentioned various functions in the form of a hardware structure, a software module or a hardware structure plus a software module. Some of the functions described above may be performed by hardware structures, software modules, or hardware structures plus software modules.

Reference is now made to FIG. 10, FIG. 10is a schematic structural diagram of a communication apparatus 100 provided in an embodiment of the present disclosure. The communication apparatus 100 shown in FIG. 10 can include a processing module 101 and a transceiving module 102. The transceiving module 102 can include a transmitting module and/or a receiving module, the transmitting module is used or realizing a transmitting function, the receiving module is used for realizing a receiving function, and the transceiving module 102 can realize the transmitting function and/or the receiving function.

The communication apparatus 100 can be a terminal device, or an apparatus in the terminal device, or an apparatus which can be matched with the terminal device. Optionally, the communication apparatus 100 can be a network device, or an apparatus in the network device, or an apparatus which can be matched with the network device.

The communication apparatus 100 is a network device, and includes:
a processing module 101 configured to, in response to a maximum number of physical uplink shared channel (PUSCH) transmission layers supported by a terminal device being increased to 8 layers, extend an existed first sounding reference signal resource indicator (SRI) mapping table based on Lₘₐₓ, the maximum number of uplink data transmission layers, supported by the terminal device, and obtain a second SRI mapping table; and
a transceiving module 102 configured to indicate a first SRS resource combination measured from an SRS resource set to the terminal device based on the second SRI mapping table, in which, the first SRS resource combination indicates a pre-encoding matrix for PUSCH transmission, and the first SRS resource combination includes at least one single-port SRS resource.

Optionally, the processing module 101 is further configured to:
determine a number of newly added second uplink data transmission layer(s) and a configuration number set corresponding to an SRS resource set configured for the terminal device based on Lₘₐₓ, the maximum number of uplink data transmission layers, and a number of existed first uplink data transmission layer(s), in which the configuration number set includes N_{SRS}, a number of SRS resource(s) configured in the SRS resource set; and
extend the first SRI mapping table based on the number of second uplink data transmission layer(s) and the configuration number set, and obtain the second SRI mapping table.

Optionally, the processing module 101 is further configured to:
for each of the first uplink data transmission layer(s), extend a first mapping relationship between an SRI index value and an SRS resource combination under the second candidate number, and extending the first SRI mapping table based on the first mapping relationship, and obtain the second SRI mapping table;
for each of the second uplink data transmission layer(s), extend a second mapping relationship between the SRI index value and the SRS resource combination under each candidate number in the configuration number set, and obtaining a fourth SRI mapping table based on the second mapping relationship; and determine the third SRI mapping table and the fourth SRI mapping table as the second SRI mapping table.

Optionally, the transceiving module 102 is further configured to:
determine the pre-encoding matrix and a corresponding number of third uplink data transmission layer(s) TRI based on the first SRS resource combination;
determine an SRI mapping table corresponding to the number of third uplink data transmission layer(s) for indication, from the third SRI mapping table and the fourth SRI mapping table; and
determine an SRI index value corresponding to the first SRS resource combination from the SRI mapping table corresponding to the number of third uplink data transmission layer(s), and indicating the SRI index value to the terminal device.

Optionally, the processing module 101 is further configured to:
select a third mapping relationship between a part of the SRI index values and the SRS resource combination from the third SRI mapping table corresponding to each of the number of first uplink data transmission layer(s);
select a fourth mapping relationship between a part of the SRI index values and the SRS resource combination from the fourth SRI mapping table corresponding to each of the number of second uplink data transmission layer(s); and
generate a restricted SRI mapping table based on the selected third mapping relationship and the selected fourth mapping relationship, in which the restricted SRI mapping table is the second SRI mapping table.

Optionally, the transceiving module 102 is further configured to: determine that the first SRS resource combination is present in the restricted SRI mapping table, acquire an SRI index value corresponding to the first SRS resource combination from the restricted SRI mapping table, and indicating the SRI index value to the terminal device.

Optionally, the transceiving module 102 is further configured to:
determine that the first SRS resource combination is absent in the restricted SRI mapping table, re-select one SRS resource combination being present in the restricted SRI mapping table and updating the re-selected SRS resource combination as the first SRS resource combination; and
determining an SRI index value corresponding to the updated first SRS resource combination, and indicating the SRI index value to the terminal device.

Optionally, the transceiving module 102 is further configured to:
send the restricted SRI mapping table(s) to the terminal device via a first high-layer signaling, and/or updating the restricted SRI mapping table(s) in whole or in part via a second high-layer signaling.

Optionally, the processing module 101 is further configured for:
when determining that the second SRI mapping table includes the third SRI mapping table and the fourth SRI mapping table, determine a number of third uplink data transmission layer(s) for the PUSCH transmission corresponding to the first SRS resource combination;
group the SRI mapping table(s) corresponding to the number of third uplink data transmission layer(s), and obtain candidate SRI mapping sub-table(s) corresponding to the number of third uplink data transmission layer(s), and determine a first SRI mapping sub-table where the first SRS resource combination is located from the candidate SRI mapping sub-table(s); and
optionally, the transceiving module 101 is further configured to:
   determine a first SRI index value corresponding to the first SRS resource combination from the first SRI mapping sub-table, and send the first SRI index value to the terminal device.

Optionally, the transceiving module 102 is further configured to: send the first SRI mapping sub-table(s) to the terminal device via a third high-layer signaling, and/or updating the second SRI mapping table(s) via in whole or in part a fourth high-layer signaling.

Optionally, the high-layer signaling includes radio control resource (RRC) signaling and/or media access control-control element (MAC-CE), in which the MAC-CE signaling is capable of updating the restricted SRI mapping table or the first SRI mapping sub-table.

The communication apparatus 100 is a terminal device, and includes:
a processing module 101 configured to, in response to a maximum number of physical uplink shared channel (PUSCH) transmission layers supported by the terminal device being increased to 8 layers, and acquire a second SRI mapping table, in which the second SRI mapping table is obtained by extending an existed first SRI mapping table, to determine a pre-encoding matrix for PUSCH transmission based on a first SRS resource combination, in which, the first SRS resource combination is a combination formed by SRS resource(s) selected from an SRS resource set and includes at least one single-port SRS resource; and
a transceiving module 102 configured to receive an SRI index value sent by a network device, and determine the first SRS resource combination from the third SRI mapping table based on the SRI index value,

Optionally, the processing module 101 is further configured to:
extend an existed first sounding reference signal resource indicator (SRI) mapping table based on Lₘₐₓ, a maximum number of uplink data transmission layers, supported by the terminal device, and obtain the second SRI mapping table.

Optionally, the processing module 101 is further configured to:
determine a number of newly added second uplink data transmission layer(s) and a configuration number set corresponding to a sounding reference signal (SRS) resource set configured for the terminal device based on Lₘₐₓ, the maximum number of uplink data transmission layers, and a number of existed first uplink data transmission layer(s), in which the configuration number set includes N_{SRS}, a number of SRS resource(s) configured in the SRS resource set; and
extend the first SRI mapping table based on the number of second uplink data transmission layer(s) and the configuration number set, and obtain the second SRI mapping table.

Optionally, the configured number set includes an existed first candidate number and a newly added second candidate number, and the processing module 101 is further configured for:
for each of the second uplink data transmission layer(s), extend a first mapping relationship between an SRI index value and an SRS resource combination under the second candidate number, and extending the first SRI mapping table based on the first mapping relationship, and obtain a third SRI mapping table;
for each of the second uplink data transmission layer(s), extend a second mapping relationship between the SRI index value and the SRS resource combination under each candidate number in the configuration number set, and obtaining a fourth SRI mapping table based on the second mapping relationship; and
determine the third SRI mapping table and the fourth SRI mapping table as the second SRI mapping table.

Optionally, the processing module 101 is further configured to:
determine a number of third uplink data transmission layer(s) corresponding to the pre-encoding matrix;
determining the SRI mapping table corresponding to the number of third uplink data transmission layer(s) from the third SRI mapping table and the fourth SRI mapping table; and
determining the SRS resource combination indicated by the SRI index value from the SRI mapping table corresponding to the number of third uplink data transmission layer(s), and determining the SRS resource combination as the first SRS resource combination.

Optionally, the processing module 101 is further configured to:
receive a restricted SRI mapping table sent by the network device via a first high-layer signaling, in which the restricted SRI mapping table is the second SRI mapping table, and includes a part of third mapping relationships selected from the third SRI mapping table and a part of fourth mapping relationships selected from a fourth SRI mapping table; the mapping relationship indicates a relationship between the SRI index value and the SRS resource combination, the second SRI mapping table is a mapping table for the number of existed first uplink data transmission layer(s), and the fourth SRI mapping table is a mapping table for the number of newly added second uplink data transmission layer(s).

Optionally, the processing module 102 is further configured to:
update the restricted SRI mapping table in whole or in part via a second high-layer signaling.

Optionally, the processing module 101 is further configured to:
determine the SRS resource combination indicated by the SRI index value from the restricted SRI mapping table, and determine the SRS resource combination as the first SRS resource combination.

Optionally, the processing module 101 is further configured to:
receive a first SRI mapping sub-table sent by the network device via a third high-layer signaling, in which the first SRI mapping sub-table is the second SRI mapping table and is one sub-table in an SRI mapping table corresponding to the number of third uplink data transmission layer(s) indicated by the first SRS resource combination.

Optionally, the processing module 101 is further configured to:
update the first SRI mapping sub-table in whole or in part via a fourth high-layer signaling
Optionally, the processing module 101 is further configured to:
   determine the SRS resource combination indicated by the SRI index value from the first SRI mapping sub-table, and determine the SRS resource combination as the first SRS resource combination.

Optionally, the processing module 101 is further configured to:
screen an initial pre-encoding matrix based on the first SRS resource combination, and obtain the pre-encoding matrix.

Reference is now made to FIG. 11, FIG. 11is a schematic structural diagram of another communication apparatus 110 provided in an embodiment of the present disclosure. The communication apparatus 110 can be a terminal device, or a network device, or a chip, a chip system or a processor, etc. supporting the network device to realize the above-mentioned method, or a chip, a ship system or a processor, etc. supporting the network device to realize the above-mentioned method. This apparatus can be used for realizing the method described in the above-mentioned method embodiments, and can specifically refer to the description for the above-mentioned method embodiments.

The communication apparatus 110 can include one or more processors 111. The processor 111 can be a general-purpose processor or a special-purpose processor, etc. For example, the processor can be a baseband processor or a central processor. The baseband processor can be used for processing a communication protocol and communication data, and the central processor can be used for controlling a communication apparatus (such as a base station, a baseband chip, a terminal device, a terminal device chip, and a DU or a CU), executing a computer program, and processing data of the computer program.

Optionally, the communication apparatus 110 can further include one or more memories 112 in which a computer program 114 can be stored, and the processor 111 executes the computer program 114, such that the communication apparatus 110 executes the method described in the above-mentioned method embodiments. Optionally, the memory 112 can further store data. The communication apparatus 110 and the memory 112 can be disposed alone or integrated together.

Optionally, the communication apparatus 110 can further include a transceiver 115 and an antenna 116. The transceiver 115 can be referred to as a transceiving unit, a transceiving machine, or a transceiving circuit, etc., and is used for realizing a transceiving function. The transceiver 115 can include a receiver and a transmitter, the receiver can be referred to as a receiving machine or a receiving circuit, etc., and is used for realizing a receiving function; and the transmitter can be referred to as a transmitting machine or a transmitting circuit, etc., and is used for realizing a transmitting function.

Optionally, the communication apparatus 110 can further include one or more interface circuits 117. The interface circuit 117 is used for receiving code instructions and transmitting the code instructions to the processor 111. The processor 111 runs the code instructions, such that the communication apparatus 110 executes the method described in the above-mentioned method embodiments.

In an implementation, the processor 111 can include a transceiver used for realizing receiving and transmitting functions. For example, this transceiver can be a transceiving circuit, or an interface, or an interface circuit. The transceiving circuit, the interface or the interface circuit used for realizing the receiving and transmitting functions can be separated or integrated together. The above-mentioned transceiving circuit, interface or interface circuit can be used for reading and writing codes/data, or the above-mentioned transceiving circuit, interface or interface circuit can be used for transmitting or delivering signals.

In an implementation, the processor 111 can store a computer program 113, and the computer program 113 runs on the processor 111, such that the communication apparatus 110 executes the method described in the above-mentioned method embodiments. The computer program 113 may be solidified in the processor 111, in this case, the processor 111 may be realized by hardware.

In an implementation, the communication apparatus 110 can include a circuit which can realize the transmitting or receiving or communication function in the above-mentioned method embodiments. The processor and the transceiver that are described in the present disclosure can be realized on an integrated circuit (IC), an analog IC, a radio frequency integrated circuit (RFIC), a mixed signal IC, an application specific integrated circuit (ASIC), a printed circuit board (PCB), an electronic device, etc. This processor and the transceiver can also be made by using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), and gallium arsenide (GaAs).

The communication apparatus described in above embodiments can be a transmitting device or a receiving device (such as the receiving device in the above-mentioned method embodiments), however, the scope of the communication apparatus described in the present disclosure is not limited thereto, and it is possible that the structure of the communication apparatus is not limited by FIG. 11. The communication apparatus can be an independent device or a part of a larger device. For example, the communication apparatus can be:
(1) an independent integrated circuit (IC), or a chip, or a chip system, or a subsystem;
(2) a set provided with one or more ICs, and optionally, this set of the ICs can also include a storage component used for storing data and a computer program;
(3) an ASIC, such as a Modem;
(4) a module that can be embedded into other devices;
(5) a receiver, a terminal device, a smart terminal device, a cell phone, a wireless device, a handset, a mobile unit, a vehicle-mounted device, a network device, a cloud device, an artificial smart device, etc.; and
(6) other devices, etc.

A situation that the communication apparatus can be a chip or a chip system can refer to the schematic structural diagram of a chip shown in FIG. 12. The chip shown in FIG. 12 includes a processor 121 and an interface 122. There may be one or more processors 121, and there may be a plurality of interfaces 122.

Optionally, the chip further includes a memory 123, in which the memory 123 is used for storing a necessary computer program and data.

The chip is adapted to perform the functions of any of the method embodiments described above.

It can be further known by the skilled in the art that various illustrative logical blocks and steps listed in the embodiments of the present disclosure can be realized through electronic hardware, computer software or a combination thereof. Whether such a function is realized by hardware or software depends on a specific application and design requirements of a whole system. For each specific application, a person skilled in the art can realize the function by using various methods, however, such a realization should be understood as falling within the protection scope of the embodiments of the present disclosure.

Embodiments of the present disclosure also provide a DMRS port indication system including a communication apparatus as a terminal device such as a terminal device in the aforementioned method embodiments and a communication apparatus as a network devices in the aforementioned embodiment of FIG. 12, or the system includes a communication apparatus as a terminal device such as the terminal device in the aforementioned method embodiments and a communication apparatus as a network devices in the aforementioned embodiment of FIG. 13.

The present disclosure further provides a computer-readable storage medium having instructions stored thereon, and the instructions, when executed by a computer, implement the function in any one of the above-mentioned method embodiments.

The present disclosure further provides a computer program product which, when executed by a computer, realizes the function in any one of the above-mentioned method embodiments.

The above-mentioned embodiments can be entirely or partially realized through software, hardware, firmware or any combinations thereof. When realized by using the software, the embodiments can be entirely or partially realized in a form of a computer program product. The computer program product includes one or more computer programs. When the computer programs are loaded and executed on a computer, processes or functions based on the embodiments of the present disclosure are entirely or partially generated. The computer can be a general-purpose computer, a special-purpose computer, a computer network, or other programmable apparatuses. The computer programs can be stored in a computer-readable storage medium, or transmitted from one computer-readable storage medium to another computer-readable storage medium, for example, the computer programs can be transmitted from one website, computer, server or data center to another website, computer, server or data center in a wired (such as a coaxial cable, an optical fiber, and a digital subscriber line (DSL)) or wireless (such as infrared, wireless, and microwave) manner. The computer-readable storage medium can be any available medium that can be accessed by the computer or an integrated data storage device such as a server and a data center including one or more available media. The available medium can be a magnetic medium (such as floppy disk, a hard disk, and a cassette), an optical medium (such as a high-density digital video disc (DVD)), or a semiconductor medium (such as a solid state disk (SSD)), etc.

It can be understood by those of ordinary skilled in the art that various digital serial numbers such as first and second involved in the present disclosure are only for distinguishing for facilitating description, are not intended to limit the scope of the embodiments of the present disclosure, but also denote a chronological order.

At least one in the present disclosure can be described as one or more, a plurality of can be two, three, four or more, which is not limited in the present disclosure. In the embodiments of the present disclosure, for a technical feature, technical features in such a technical feature are distinguished by "first", "second", "third", "A", "B", "C", "D", etc., and there are no chronological or size order among the technical features described by the "first", "second", "third", "A", "B", "C", and "D".

A corresponding relationship shown in each table in the present disclosure can be configured or predefined. A value of information in each table is only an example, and other values can be configured, which is not limited in the present disclosure. When a corresponding relationship between the information and each parameter is configured, it is not necessarily required to configure all corresponding relationships shown in each table. For example, in the tables in the present disclosure, it is also possible that corresponding relationships shown in certain lines are not configured. For another example, appropriate deformation adjustment, such as splitting and merging, can be made based on the above-mentioned tables. Names of parameters shown in titles in each of the above-mentioned tables can also adopt other names that can be understood by the communication apparatus, and the values or expressions of the parameters thereof can also adopt other values or expressions that can be understood by the communication apparatus. During implementation, each of the above-mentioned tables can also adopt other data structures, such as arrays, queues, containers, stacks, linear tables, pointers, linked lists, trees, graphs, structures, classes, heaps, and hash tables or Hash tables.

Pre-definition in the present disclosure can be understood as definition, preliminary definition, storage, pre-storage, pre-negotiation, pre-configuration, solidification, or pre-burning.

Those of ordinary skill in the art can realize that units and algorithm steps in all examples described in conjunction with the embodiments disclosed in the present disclosure can be realized by electronic hardware, computer software or a combination of both. Whether these functions are realized by hardware or software depends on specific applications and design constraints of technical solutions. The skilled in the art can adopt different methods to realize the described functions in each specific application, which, however, should be considered as falling within the scope of the present disclosure.

It can be clearly known by the skilled in the art that, for facilitating and simplifying the description, specific working processes of the above-mentioned system, apparatus and unit can refer to corresponding processes in the above-mentioned method embodiments so as to be no longer repeated herein.

The above-mentioned descriptions are only specific implementations of the present disclosure, but the protection scope of the present disclosure is not limited thereto. Any variations or replacements that can be readily envisioned by those skilled in the art within the technical scope disclosed by the present disclosure should fall within the protection scope of the present disclosure. Therefore, the protection scope of the present disclosure should be subject to the protection scope defined in the claims.

## Claims

1. A method of sending information for non-codebook based physical uplink shared channel (PUSCH), performed by a network device, the method comprising:
determining that a maximum number of PUSCH transmission layers supported by a terminal device is increased to 8 layers, extending an existed first sounding reference signal resource indicator (SRI) mapping table based on Lₘₐₓ, a maximum number of uplink data transmission layers, supported by the terminal device, and obtaining a second SRI mapping table; and
indicating a first SRS resource combination measured from a non-codebook SRS resource set to the terminal device based on the second SRI mapping table, wherein the first SRS resource combination indicates a pre-encoding matrix for PUSCH transmission, and the first SRS resource combination comprises at least one single-port SRS resource.

2. The method according to claim 1, wherein extending the existed first SRI mapping table based on the maximum number of uplink data transmission layers supported by the terminal device, and obtaining the second SRI mapping table comprises:
determining a number of newly added second uplink data transmission layer(s) and a configuration number set corresponding to an SRS resource set configured for the terminal device based on Lₘₐₓ, the maximum number of uplink data transmission layers, and a number of existed first uplink data transmission layer(s), wherein the configuration number set comprises N_{SRS}, a number of SRS resource(s) configured in the SRS resource set; and
extending, the first SRI mapping table based on the number of second uplink data transmission layer(s) and the configuration number set, and obtaining the second SRI mapping table.

3. The method according to claim 2, wherein the configuration number set comprises an existed first candidate number and a newly added second candidate number, extending the first SRI mapping table based on the number of second uplink data transmission layer(s) and the configuration number set comprises:
for each of the first uplink data transmission layer(s), extending a first mapping relationship between an SRI index value and an SRS resource combination under the second candidate number, and extending the first SRI mapping table based on the first mapping relationship, and obtaining a fourth SRI mapping table;
for each of the second uplink data transmission layer(s), extending a second mapping relationship between the SRI index value and the SRS resource combination under each candidate number in the configuration number set, and obtaining a fourth SRI mapping table based on the second mapping relationship; and
determining the third SRI mapping table and the fourth SRI mapping table as the second SRI mapping table.

4. The method according to claim 3, wherein indicating the first SRS resource combination measured to the terminal device based on the second SRI mapping table comprises:
determining the pre-encoding matrix and a corresponding number of third uplink data transmission layer(s) based on the first SRS resource combination;
determining an SRI mapping table corresponding to the number of third uplink data transmission layer(s) for indication from the third SRI mapping table and the fourth SRI mapping table; and
determining an SRI index value corresponding to the first SRS resource combination from the SRI mapping table corresponding to the number of third uplink data transmission layer(s), and indicating the SRI index value to the terminal device.

5. The method according to claim 3, wherein, after obtaining the third SRI mapping table and the fourth SRI mapping table, the method further comprises:
selecting a third mapping relationship between a part of the SRI index values and the SRS resource combination from the third SRI mapping table corresponding to each of the number of first uplink data transmission layer(s);
selecting a fourth mapping relationship between a part of the SRI index values and the SRS resource combination from the fourth SRI mapping table corresponding to each of the number of second uplink data transmission layer(s); and
generating a restricted SRI mapping table based on the selected third mapping relationship and the selected fourth mapping relationship, wherein the restricted SRI mapping table is the second SRI mapping table.

6. The method according to claim 5, wherein indicating the first SRS resource combination measured to the terminal device based on the second SRI mapping table comprises:
determining that the first SRS resource combination is present in the restricted SRI mapping table, acquiring an SRI index value corresponding to the first SRS resource combination from the restricted SRI mapping table, and indicating the SRI index value to the terminal device.

7. The method according to claim 5, wherein indicating the first SRS resource combination measured to the terminal device based on the second SRI mapping table comprises:
determining that the first SRS resource combination is absent in the restricted SRI mapping table, re-selecting one SRS resource combination being present in the restricted SRI mapping table and updating the re-selected SRS resource combination as the first SRS resource combination; and
determining an SRI index value corresponding to the updated first SRS resource combination, and indicating the SRI index value to the terminal device.

8. The method according to claim 5 or 6, wherein, after determining the restricted SRI mapping table, the method further comprises:
sending the restricted SRI mapping table(s) to the terminal device via a first high-layer signaling, and/or updating the restricted SRI mapping table(s) in whole or in part via a second high-layer signaling.

9. The method according to claim 3, wherein indicating the first SRS resource combination measured to the terminal device based on the second SRI mapping table comprises:
when determining that the second SRI mapping table comprises the third SRI mapping table and the fourth SRI mapping table, determining a number of third uplink data transmission layer(s) during the PUSCH transmission corresponding to the first SRS resource combination;
grouping the SRI mapping table(s) corresponding to the number of third uplink data transmission layer(s), obtaining candidate SRI mapping sub-table(s) corresponding to the number of third uplink data transmission layer(s), and determining a first SRI mapping sub-table where the first SRS resource combination is located from the candidate SRI mapping sub-table(s); and
determining a first SRI index value corresponding to the first SRS resource combination from the first SRI mapping sub-table, and sending the first SRI index value to the terminal device.

10. The method according to claim 9, wherein, after the obtaining candidate SRI mapping sub-table(s) corresponding to the number of third uplink data transmission layer(s), the method further comprises:
sending the first SRI mapping sub-table(s) to the terminal device via a third high-layer signaling, and/or updating the first SRI mapping sub-table(s) in whole or in part via a fourth high-layer signaling.

11. The method according to claim 8 or 10, wherein the high-layer signaling comprises radio control resource (RRC) signaling and/or media access control-control element (MAC-CE), wherein the MAC-CE signaling is capable of updating the restricted SRI mapping table or the first SRI mapping sub-table.

12. A method of receiving information for non-codebook based PUSCH, performed by a terminal device, and comprising:
increasing a maximum number of physical uplink shared channel (PUSCH) transmission layers supported by the terminal device to 8 layers, and acquiring a second SRI mapping table, wherein the second SRI mapping table is obtained by extending an existed first SRI mapping table;
receiving an SRI index value sent by a network device, and determining a first SRS resource combination from the third SRI mapping table based on the SRI index value, wherein the first SRS resource combination is a combination formed by SRS resource(s) selected from an SRS resource set and comprises at least one single-port SRS resource; and
determining a pre-encoding matrix for actual PUSCH transmission based on the first SRS resource combination.

13. The method according to claim 12, wherein obtaining the second SRI mapping table comprises:
extending an existed first sounding reference signal resource indicator (SRI) mapping table based on Lₘₐₓ, a maximum number of uplink data transmission layers supported by the terminal device, and obtaining the second SRI mapping table.

14. The method according to claim 13, wherein extending the existed first sounding reference signal resource indicator (SRI) mapping table based on the maximum number of uplink data transmission layers supported by the terminal device, and obtaining the second SRI mapping table comprises:
determining a number of newly added second uplink data transmission layer(s) and a configuration number set corresponding to a sounding reference signal (SRS) resource set configured for the terminal device based on Lₘₐₓ, the maximum number of uplink data transmission layers and a number of existed first uplink data transmission layer(s), wherein the configuration number set comprises N_{SRS}, a number of SRS resource(s) configured in the SRS resource set; and
extending the first SRI mapping table based on the number of second uplink data transmission layer(s) and the configuration number set, and obtaining the second SRI mapping table.

15. The method according to claim 14, wherein the configuration number set comprises an existed first candidate number and a newly added second candidate number, wherein the extending the first SRI mapping table based on the number of second uplink data transmission layer(s) and the configuration number set comprises:
for each of the second uplink data transmission layer(s), extending a first mapping relationship between an SRI index value and an SRS resource combination under the second candidate number, and extending the first SRI mapping table based on the first mapping relationship, and obtaining a third SRI mapping table;
for each of the second uplink data transmission layer(s), extending a second mapping relationship between the SRI index value and the SRS resource combination under each candidate number in the configuration number set, and obtaining a fourth SRI mapping table based on the second mapping relationship; and
determining the third SRI mapping table and the fourth SRI mapping table as the second SRI mapping table.

16. The method according to claim 12, wherein determining the first SRS resource combination from the third SRI mapping table based on the SRI index value comprises:
determining a number of third uplink data transmission layer(s) corresponding to the pre-encoding matrix;
determining an SRI mapping table corresponding to the number of third uplink data transmission layer(s) from the third SRI mapping table and the fourth SRI mapping table; and
determining the SRS resource combination indicated by the SRI index value from the SRI mapping table corresponding to the number of third uplink data transmission layer(s), and determining the SRS resource combination as the first SRS resource combination.

17. The method according to claim 12, wherein obtaining the second SRI mapping table comprises:
receiving a restricted SRI mapping table sent by the network device via a first high-layer signaling, wherein the restricted SRI mapping table is the second SRI mapping table, and comprises a part of third mapping relationships selected from the third SRI mapping table and a part of fourth mapping relationships selected from a fourth SRI mapping table; the mapping relationship indicates a relationship between the SRI index value and the SRS resource combination, the second SRI mapping table is a mapping table for the number of existed first uplink data transmission layer(s), and the fourth SRI mapping table is a mapping table for the number of newly added second uplink data transmission layer(s).

18. The method according to claim 17, wherein, after receiving the restricted SRI mapping table sent by the network device via the first high-layer signaling, the method further comprises:
updating the restricted SRI mapping table in whole or in part via a second high-layer signaling.

19. The method according to claim 17 or 18, wherein determining the first SRS resource combination from the second SRI mapping table based on the SRI index value comprises:
determining the SRS resource combination indicated by the SRI index value from the restricted SRI mapping table, and determining the SRS resource combination as the first SRS resource combination.

20. The method according to claim 12, wherein obtaining the second SRI mapping table comprises:
receiving a first SRI mapping sub-table sent by the network device via a third high-layer signaling, wherein the first SRI mapping sub-table is the second SRI mapping table and is one sub-table in an SRI mapping table corresponding to the number of third uplink data transmission layer(s) indicated by the first SRS resource combination.

21. The method according to claim 20, wherein, after receiving the first SRI mapping sub-table sent by the network device via the third high-layer signaling, the method further comprises:
updating the first SRI mapping sub-table in whole or in part via a fourth high-layer signaling.

22. The method according to claim 20, wherein determining the first SRS resource combination from the second SRI mapping table based on the SRI index value comprises:
determining the SRS resource combination indicated by the SRI index value from the first SRI mapping sub-table, and determining the SRS resource combination as the first SRS resource combination.

23. The method according to any one of claims 12-22, wherein determining the pre-encoding matrix for PUSCH transmission based on the first SRS resource combination comprises:
screening an initial pre-encoding matrix based on the first SRS resource combination, and obtaining the pre-encoding matrix.

24. A network device, comprising:
a processing module configured to, in response to a maximum number of physical uplink shared channel (PUSCH) transmission layers supported by a terminal device being increased to 8 layers, extend an existed first sounding reference signal resource indicator (SRI) mapping table based on Lₘₐₓ, a maximum number of uplink data transmission layers, supported by the terminal device, obtaining a second SRI mapping table; and
a transceiving module configured to, indicate a first SRS resource combination measured from a non-codebook SRS resource set to the terminal device based on the second SRI mapping table, wherein the first SRS resource combination indicates a pre-encoding matrix for PUSCH transmission, and the first SRS resource combination comprises at least one single-port SRS resource.

25. A terminal device, comprising:
a processing module configured to, increase a maximum number of physical uplink shared channel (PUSCH) transmission layers supported by the terminal device to 8 layers, and acquire a second SRI mapping table, wherein the second SRI mapping table is obtained by extending an existed first SRI mapping table, and determine a pre-encoding matrix for PUSCH transmission based on a first SRS resource combination, wherein the first SRS resource combination is a combination formed by SRS resource(s) selected from an SRS resource set and comprises at least one single-port SRS resource; and
a transceiving module configured to receive an SRI index value sent by a network device, and determine the first SRS resource combination from the second SRI mapping table based on the SRI index value.

26. A communication apparatus, comprising a processor and a memory, the memory having a computer program stored therein, the processor executing the computer program stored in the memory to cause the apparatus to perform the method according to any one of claims 1 to 12.

27. A communication apparatus, comprising a processor and a memory, the memory having a computer program stored therein, the processor executing the computer program stored in the memory to cause the apparatus to perform the method according to any one of claims 13 to 23.

28. A communication apparatus, comprising: a processor and an interface circuit;
the interface circuit being configured to receive code instructions and transmit the code instructions to the processor; and
the processor being configured to execute the code instructions to perform the method according to any one of claims 1 to 12.

29. A communication apparatus, comprising: a processor and an interface circuit;
the interface circuit being configured to receive code instructions and transmit the code instructions to the processor; and
the processor being configured to execute the code instructions to perform the method according to any one of claims 13 to 23.

30. A computer-readable storage medium, configured for storing instructions that, when executed, cause the method according to any one of claims 1 to 12 to be implemented.

31. A computer-readable storage medium, configured for storing instructions that, when executed, cause the method according to any one of claims 13 to 23 to be implemented.
